# EUROPEAN PATENT SPECIFICATION

(11) **EP 3 733 573 B1**
(45) Date of publication and mention of the grant of the patent: **01.05.2024**
(21) Application number: 18897288.9
(22) Date of filing: 05.03.2018
(51) Int. Cl.: B65G 63/00, B65G 63/02

(54) **INTERMODAL CONTAINER HIGHWAY AND RAILWAY TRANSFER SYSTEM**
INTERMODALES CONTAINERTRANSFERSYSTEM FÜR AUTOBAHN UND EISENBAHN
SYSTÈME DE TRANSFERT INTERMODAL RAIL-ROUTE DE CONTENEURS

(30) Priority: 27.12.2017 CN 201711446552; 27.12.2017 CN 201721866131 U
(43) Date of publication of application: 04.11.2020
(73) Proprietor: CRRC Yangtze Co., Ltd., Wuhan, Hubei 430212 (CN)
(72) Inventor: SU, Lijie, Wuhan, Hubei 430212 (CN); MEI, Kun, Wuhan, Hubei 430212 (CN); LIN, Liangcai, Wuhan, Hubei 430212 (CN); ZHANG, Panpan, Wuhan, Hubei 430212 (CN); TANG, Chuqiang, Wuhan, Hubei 430212 (CN); LIU, Fengwei, Wuhan, Hubei 430212 (CN); HUANG, Meilin, Wuhan, Hubei 430212 (CN); SHEN, Peng, Wuhan, Hubei 430212 (CN); ZHANG, Huatao, Wuhan, Hubei 430212 (CN); LIU, Wei, Wuhan, Hubei 430212 (CN); SONG, Shaobo, Wuhan, Hubei 430212 (CN); SUN, Xianjun, Wuhan, Hubei 430212 (CN); LIU, Aiwen, Wuhan, Hubei 430212 (CN); YIN, Gang, Wuhan, Hubei 430212 (CN); ZHANG, Nan, Wuhan, Hubei 430212 (CN); PENG, Quanhai, Wuhan, Hubei 430212 (CN); HUANG, Heng, Wuhan, Hubei 430212 (CN); WANG, Quanhu, Wuhan, Hubei 430212 (CN)
(74) Representative: Bandpay & Greuter
(86) International application number: PCT/CN2018/078014
(87) International publication number: WO 2019/127901

(56) References cited:
- EP-A1- 0 831 002
- WO-A1-2006/119955
- CH-A5- 693 334
- CN-A- 101 198 532
- CN-A- 103 010 767
- CN-A- 107 055 136
- CN-A- 107 336 998
- CN-B- 103 010 767
- CN-U- 206 456 369

## Description

### TECHNICAL FIELD

The disclosure relates to the technical field of container multimodal transportation, and in particular to a container rail-road transfer system.

### BACKGROUND OF THE INVENTION

At present, the development level of multimodal transportation in China is still relatively low, and road transportation has been the mainstay for a long time. The more prominent problems on multimodal transportation include: the poor coordination among roads, railways and waterway transport; the imperfect market environment; the inadequate laws, regulations and standards; and the lag in the application of advanced technologies; and so on. The scale of multimodal transportation volume only accounts for 2.9% of the total social freight volume, which is far below the development level of the United States. The operating efficiency of multimodal transportation is not high, and the cost for cargo transshipment accounts for about 30% of the total logistics cost, resulting in the domestic logistics cost much higher than the logistics cost of those countries with a developed logistics industry such as the United States, Canada and Europe. Strengthening the research and development of the core technology and equipment of the logistics industry, and promoting the industrialization of key technologies and equipment, have become the main development tasks of the national logistics industry in the medium and long term. As of September 1, 2016, there are more than 1,506 container handling stations in 18 railway bureaus across China, and there are huge application prospects for rail-road transit and transfer equipment.

A container handling line of an electrified railway station generally uses rail-road transit and transfer equipment which is not connected in a network, that is, an electrified railway contact network is disconnected in a container handling area, and rail-mounted gantry cranes, container reach stacker or other lifting equipment are used in the container handling area for loading, unloading and transshipment of containers between railway and road.

The rail-mounted gantry cranes in the prior art is bulky and costly, and requires a large work site, thereby reducing the available space in a work site. In a transit process, a train arrived at/departing from a station cannot directly enter a handling area, thus shunting and connecting operations are required, which results in a low efficiency in rail-road transshipment. EP patent application EP0831002A1 discloses a rail-road transfer system for transferring a container between a railway track and a container lorry according to the preamble of claim 1, but there is still a need for improved transfer system.

### SUMMARY OF THE INVENTION

The present disclosure provides a container rail-road transfer system according to claim 1, which solves or partially solves the technical problems in the prior art that the utilization rate of work site on the container handling line of the electrified railway station is lower and the rail-road transfer efficiency is poor.

The present disclosure provides a container rail-road transfer system for transferring a container on a railway vehicle to a container lorry, and/or transferring a container on a container lorry to a railway vehicle. The railway vehicle runs on a railway track under an electrified railway contact network; the container rail-road transfer system comprises: a lifting device disposed with respect to the railway track, a two-way side pick-up device, and a container handling device disposed with respect to a parking position of the container lorry, wherein: the two-way side pick-up device is disposed on a carrying platform between the railway track and the parking position of the container lorry, and configured to transfer the container from a position corresponding to the lifting device to a position corresponding to the container handling device, and/or, transfer the container from a position corresponding to the container handling device to a position corresponding to the lifting device; the lifting device is configured to lift the container on the railway vehicle and place the container on the two-way side pick-up device, and/or, lift the container on the two-way side pick-up device and place the container on the railway vehicle; and the container handling device is configured to lift the container on the container lorry and place the container on the two-way side pick-up device, and/or lift the container on the two-way side pick-up device and place the container on the container lorry.

The lifting device comprises a first track disposed on the carrying platform, a second track slidably disposed on the first track, door-shaped support mechanisms symmetrically disposed on two ends of the carrying platform, a number of container twist lock parts disposed under the top of the door-shaped support mechanism at two sides thereof, a first slide driving mechanism, and a second slide driving mechanism. the first track is arranged along a length direction of the carrying platform, and is parallel to the railway track; the second track is arranged perpendicular to the first track; the number of container twist lock parts are configured to cooperate with corner fittings at four corners on the top of the container to lock or unlock the container; the door-shaped support mechanism comprises a first telescopic leg, a second telescopic leg, and a crossbeam. The container twist lock parts are fixed under the crossbeam on two sides thereof; an fixed end of the first telescopic leg is slidably disposed on the second track, and a movable end of the first telescopic leg is fixedly connected to one end of the crossbeam; a fixed end of the second telescopic leg is fixedly connected to another end of the crossbeam, and a movable end of the second telescopic leg is suspended; the first slide driving mechanism is configured to drive the second track to slide along the first track; the second slide driving mechanism is configured to drive the door-shaped support mechanisms to slide along the second track, wherein, before raising and lowering the container of the railway vehicle, the door-shaped support mechanisms are slid along the second track so that the second telescopic leg is extended to a side of the railway track; then the door-shaped support mechanisms are slid along the first track so that the positions of the number of container twist lock parts on the door-shaped support mechanisms correspond to the positions of corner fittings on the top of the container; and then, the second telescopic leg is extended to be fixed on the ground on the side of the railway track. Embodiments are defined in the dependent claims.

In some embodiments, the two-way side pick-up device comprises a raising-and-lowering mechanism, a bridging mechanism and a tray mechanism; wherein, the raising-and-lowering mechanism is disposed on the carrying platform; the bridging mechanism is slidably disposed on the raising-and-lowering mechanism; the tray mechanism is slidably disposed on the bridging mechanism; the raising-and-lowering mechanism comprises a raising-and-lowering platform, a number of first telescopic cylinders and a number of first slideways arranged side by side; the number of first telescopic cylinders are arranged on the bottom of the raising-and-lowering platform to drive the raising-and-lowering platform to rise or drop; one end of the first telescopic cylinders is fixed on the carrying platform; the first slideways are disposed on the top of the raising-and-lowering platform and extended in a direction from the railway track to the container lorry; and the bridging mechanism is slidably disposed on the first slideways.

In some embodiments, the bridging mechanism comprises: first concave groove members, the number thereof is the same as the number of the first slideways; a number of first fixed plates connected between the first concave groove members, second slideways disposed on the top of each of the first concave groove members, a first driving component, and a second driving component;
the first concave groove members are disposed on and cover the first slideways; the first driving component is configured to drive the first concave groove members to extend from an initial position to the railway track, or to retract from the railway track to the initial position; the second driving component is configured to drive the first concave groove members to extend from the initial position to the parking position of the container lorry, or to retract from the parking position of the container lorry to the initial position; and the tray mechanism is slidably disposed on the second slideways.

In some embodiments, the first driving component comprises a first actuator cylinder and a first connection cylinder fixed at an output end of the first actuator cylinder; the first concave groove members are provided with first cylinder holes, and a rod body of the first connection cylinder can be extended into or exit from the first cylinder holes; an fixed end of the first actuator cylinder is fixed on the raising-and-lowering platform of the raising-and-lowering mechanism, and the output end of the first actuator cylinder is configured to drive the first connection cylinder and the first concave groove members to move; the second driving component comprises a second actuator cylinder and a second connection cylinder fixed at an output end of the second actuator cylinder; the first concave groove members are provided with second cylinder holes, and a rod body of the second connection cylinder can be extended into or exit from the second cylinder holes; and an fixed end of the second actuator cylinder is fixed on the raising-and-lowering platform of the raising-and-lowering mechanism, and the output end of the second actuator cylinder is configured to drive the second connection cylinder and the first concave groove members to move.

In some embodiments, the tray mechanism comprises: second concave groove members, the number thereof is the same as the number of the second slideways; a number of second fixed plates connected between the second concave groove members; a number of limit guide stops disposed on the top of the second concave groove members; a number of travel wheels fixed on the side of the second concave groove members; a third driving component, and a fourth driving component; the second concave groove members are disposed on and cover the second slideways; the container is positioned between the limit guide stops after the container is placed on the second concave groove members; the travel wheels are rollingly disposed on the raising-and-lowering platform of the raising-and-lowering mechanism; the third driving component is configured to drive the second concave groove members to extend from an initial position to the railway track, or to retract from the railway track to the initial position; and the fourth driving component is configured to drive the second concave groove members to extend from an initial position to the parking position of the container lorry, or to retract from the parking position of the container lorry to the initial position.

In some embodiments, the third driving component comprises a third actuator cylinder and a third connection cylinder fixed at an output end of the third actuator cylinder. The second concave groove members are provided with third cylinder holes, and a rod body of the third connection cylinder can be extended into or exit from the third cylinder holes; a fixed end of the third actuator cylinder is fixed on the raising-and-lowering platform of the raising-and-lowering mechanism, and the output end of the third actuator cylinder is configured to drive the third connection cylinder and the second concave groove members to move; the fourth driving component comprises a fourth actuator cylinder and a fourth connection cylinder fixed at an output end of the fourth actuator cylinder. the second concave groove members are provided with fourth cylinder holes, and a rod body of the fourth connection cylinder can be extended into or exit from the fourth cylinder holes; a fixed end of the fourth actuator cylinder is fixed on the raising-and-lowering platform, and the output end of the fourth actuator cylinder is configured to drive the fourth connection cylinder and the second concave groove members to move.

In some embodiments, the container handling device comprises a first top beam, a second top beam, a third top beam, a number of telescopic columns connected under the first top beam and the second top beam, spreader fixed under the third top beam, and a support beam fixed between the telescopic columns under the second top beam. The telescopic columns under the first top beam are fixed on the carrying platform, and a distance between the telescopic columns is greater than a length of the container. The telescopic columns under the second top beam are disposed on the ground; the second top beam is parallel to the first top beam; and the parking position of the lorry is between the first top beam and the second top beam. The third top beam is fixed between the first top beam and the second top beam. The spreader is configured to cooperate with corner fittings at four corners on the top of a container to lock or unlock the container. The third actuator cylinder is provided inside the telescopic columns, and the third actuator cylinder is configured to drive the telescopic column to extend or retract. An end portion of the first concave groove members is pressed on the support beam after the bridging mechanism is extended.

In some embodiments, the container rail-road transfer system further comprises a mobile platform. The mobile platform comprises a first steel rail, a second steel rail and a mobile vehicle. The carrying platform is fixed on the mobile vehicle. The first steel rail and the second steel rail are parallel to the railway track. The mobile vehicle is slidably disposed on the first steel rail. The second steel rail is disposed on the ground under the second top beam. A roller is disposed at the bottom of the telescopic columns under the second top beam, and the roller is rollingly disposed on the second steel rail.

Based on the same inventive concept, the present disclosure also provides a container rail-road transfer system, comprising: a lifting device disposed with respect to a railway track, a two-way side pick-up device, and a container handling device disposed with respect to a parking position of the container lorry, wherein: the two-way side pick-up device is disposed on a carrying platform between the railway track and the parking position of the container lorry. The two-way side pick-up device comprises a bridging mechanism and a tray mechanism. The bridging mechanism is configured to slide to a position corresponding to the railway track, or slide to a position corresponding to the parking position of the container lorry. The tray mechanism is configured to slide on the bridging mechanism to a position corresponding to the railway track or to a position corresponding to the parking position of the container lorry. The lifting device comprises: door-shaped support mechanisms disposed at two ends of the carrying platform, and a number of container twist lock parts disposed under the top of the door leg mechanism at two sides thereof. The container twist lock parts are configured to lock the container. The door-shaped support mechanisms are configured to drive the container to rise or drop, so that the container is lifted from the tray mechanism and placed on the railway vehicle, or the container is lifted from the railway vehicle and placed on the tray mechanism. The container handling device comprises: a number of top beams, a number of telescopic columns disposed under the top beams, and a spreader fixed under one of the top beams. The spreader is configured to cooperate with corner fittings at four corners on the top of the container to lock or unlock the container. The telescopic columns are configured to extend or retract to drive the container to rise or drop, so that the container is lifted from the tray mechanism and placed on the container lorry, or the container is lifted from the container lorry and placed on the tray mechanism.

The one or more embodiments provided in the present disclosure have at least the following technical effects or advantages:

With the container rail-road transfer system of the present disclosure including a lifting device, a two-way side pick-up device and a container handling device, the container on the railway vehicle can be transferred to the container lorry and/or the container on the container lorry can be transferred to the railway vehicle without changing the position of the electrified railway contact network, so as to ensure that a space occupied by a container handling area is smaller, thereby making the construction of the entire system convenient and flexible, and adapted to the design of the existing electrified railway contact network. The two-way side pick-up device is disposed on the carrying platform between the railway track and the parking position of the container lorry, and is used to transfer a container from a position corresponding to the lifting device to a position corresponding to the container handling device, and/or transfer a container from a position corresponding to the container handling device to a position corresponding to the lifting device. The two-way side pick-up device can horizontally move the container between the railway vehicle and the container lorry, which makes the container transshipment process stable and safe, and avoids the interference between the container rail-road transfer system and the electrified railway contact network during the transshipment process. Due to the adoption of the two-way side pick-up device, the container rail-road transfer system of the present disclosure is simplified and occupies a smaller space, thereby simplifying the transfer procedures and improving the transfer efficiency. By adopting the lifting device which is used to lift a container on the railway vehicle and place the container on the two-way side pick-up device, and/or lift a container on the two-way side pick-up device and place the container on the railway vehicle, a container at the position of the railway vehicle can be lifted and/or placed conveniently and quickly, thereby improving lifting efficiency during the transshipment process. In addition, by adopting the lifting device, the structure of the container rail-road transfer system of the present disclosure is simplified, and the cost thereof is reduced. By adopting the container handling device which is used to lift the container on the container lorry and place the container on the two-way side pick-up device, and/or lift a container on the two-way side pick-up device and place the container on the container lorry, the container at the position of the container lorry can be lifted and/or placed conveniently and quickly, thereby improving lifting efficiency during the transshipment process. In addition, by adopting the container handling device, the structure of the container rail-road transfer system of the present disclosure is simplified, and the cost thereof is reduced. In this way, the container rail-road transfer system provided by the present disclosure can effectively solve the technical problems in the prior art that the utilization rate of working site on a container handling line of the electrified railway station is lower and the rail-road transfer efficiency is lower, and realize the following effects: there is no interference on the electrified railway contact network; the rail-road transfer procedures are simplified; the operating cost of the container rail-road transfer system is reduced; and the utilization rate of working site and the rail-road transfer efficiency are both improved.

### BRIEF DESCRIPTION OF THE DRAWINGS

Fig. 1 is a schematic structural diagram of a container rail-road transfer system according to one or more embodiments of the present disclosure;
Fig. 2 is a left side view of Fig. 1;
Fig. 3 is a schematic diagram showing a state where a container is lifted by the rail-road transfer system of Fig. 1;
Fig. 4 is a schematic view showing a state where a bridging mechanism and a tray mechanism of the container rail-road transfer system of Fig. 1 carry the container;
Fig. 5 is a schematic diagram showing a state where the bridging mechanism and the tray mechanism of the container rail-road transfer system of Fig. 1 carry the container and retract to their initial positions;
Fig. 6 is a schematic diagram showing a state where the bridging mechanism and the tray mechanism of the container rail-road transfer system of Fig. 1 carry the container and extend across a railway vehicle;
Fig. 7 is a schematic diagram showing a state where the bridging mechanism and the tray mechanism of the container rail-road transfer system of Fig. 1 carry the container and extend across the railway vehicle, and a lifting device lifts the container;
Fig. 8 is a schematic structural diagram of a lifting device of the container rail-road transfer system of Fig. 1;
Fig. 9 is a schematic structural diagram of Fig. 8 from another viewing angle;
Fig. 10 is a partial enlarged diagram showing the cooperation of a first track, a first member, a second track, and a first telescopic leg of Fig. 8;
Fig. 11 is a schematic structural diagram of a container handling device of the container rail-road transfer system of Fig. 1;
Fig. 12 is a schematic structural diagram of a two-way side pick-up device of the container rail-road transfer system of Fig. 1;
Fig. 13 is a schematic diagram showing a state where a first driving component (or a second driving component) and the bridging mechanism of the two-way side pick-up device of Fig. 12 are separated;
Fig. 14 is a schematic diagram showing a state where the first driving component (or the second driving component) and the bridging mechanism of the two-way side pick-up device of FIG. 12 are connected;
Fig. 15 is a left side view of Fig. 12;
Fig. 16 is a schematic diagram showing a state where the two-way side pick-up device of Fig. 12 is in an initial position;
Fig. 17 is a left side view of a tray mechanism of the two-way side pick-up device of Fig. 12;
Fig. 18 is a schematic structural diagram of the bridging mechanism of the two-way side pick-up device of Fig. 12;
Fig. 19 is a schematic structural diagram of the raising-and-lowering mechanism of the two-way side pick-up device of Fig. 12; and
Fig. 20 is a schematic structural diagram of the two-way side pick-up device of Fig. 12 when the bridging mechanism is extended.

Reference **numerals in the Figures are listed as below:**
1 - container handling device; 2 - lifting device; 3 - carrying platform; 4 - two-way side pick-up device; 5 - mobile platform; 6 - container; 7 - railway container flat car; 101 - telescopic column; 102 - support beam; 103 - first top beam; 104 - second top beam; 105 - third top beam; 106 - spreader; 201 - first telescopic leg; 202 - second telescopic leg; 203 - crossbeam; 204 - container twist lock parts; 205 - first track; 206 - second track; 207 - first member; 208 - gear motor; 401 - tray mechanism; 402 - bridging mechanism; 403 - raising-and-lowering mechanism; 404 - stop frame; 405 - horizontal plate; 4011 - third driving component/fourth driving component; 4012 - limit guide stop; 4013 - second concave groove member; 4014 - second fixed plate; 4015 - travel wheel; 4021 - first concave groove member; 4022 - second slideway; 4023 - second limit wheel; 4024 - first fixed plate; 4031 - raising-and-lowering platform; 4032 - first telescopic cylinder; 4033 - first slideway; 4034 - first driving component/second driving component; 4035 - first limit wheel.

### DETAILED DESCRIPTION OF THE INVENTION

One or more embodiments of the present application provide a container rail-road transfer system, which solves or partially solves the technical problems in the prior art that the utilization rate of work site on the container handling line of the electrified railway station is lower and the rail-road transfer efficiency is poor. With the container rail-road transfer system of the present disclosure including a lifting device, a two-way side pick-up device and a container handling device, the container on the railway vehicle can be transferred to the container lorry, and/or the container on the container lorry can be transferred to the railway vehicle, without changing the position of the electrified railway contact network, so as to ensure that a space occupied by a container handling area is smaller, thereby making the construction of the entire system convenient and flexible, and well adapted to the design of the existing electrified railway contact network. The two-way side pick-up device enables the container to move horizontally between the railway container flat car and the container lorry, which makes the container transshipment process stable and safe, and avoids the interference between the container rail-road transfer system and the electrified railway contact network during the transshipment process. Due to the adoption of the two-way side pick-up device, the container rail-road transfer system of the present disclosure is simplified and occupies a smaller space, thereby simplifying the transfer procedures and improving the transfer efficiency. By adopting the lifting device which is used to lift a container on the railway vehicle and place the container on the two-way side pick-up device, and/or lift a container on the two-way side pick-up device and place the container on the railway vehicle, a container at the position of the railway vehicle can be lifted and/or placed conveniently and quickly, thereby improving lifting efficiency during the transshipment process. In addition, by adopting the lifting device, the structure of the container rail-road transfer system of the present disclosure is simplified, and the cost thereof is reduced. By adopting the container handling device which is used to lift the container on the container lorry and place the container on the two-way side pick-up device, and/or lift a container on the two-way side pick-up device and place the container on the container lorry, the container at the position of the container lorry can be lifted and/or placed conveniently and quickly, thereby improving lifting efficiency during the transshipment process. In addition, by adopting the container handling device, the structure of the container rail-road transfer system of the present disclosure is simplified, and the cost thereof is reduced. In this way, the container rail-road transfer system provided by the present disclosure can effectively solve the technical problems in the prior art that the utilization rate of working site on a container handling line of the electrified railway station is lower and the rail-road transfer efficiency is lower, and realize the following effects: there is no interference on the electrified railway contact network; the rail-road transfer procedures are simplified; the operating cost of the container rail-road transfer system is reduced; and the utilization rate of working site and the rail-road transfer efficiency are both improved.

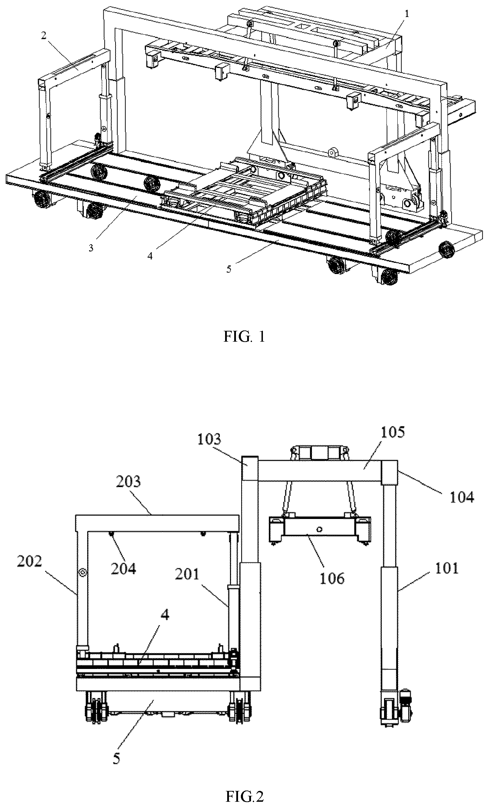

Referring to Figs. 1 and 2, one or more embodiments of the present disclosure provide a container rail-road transfer system for transferring a container 6 on a rail vehicle to a container lorry, and/or transferring the container 6 on the container lorry to the railway vehicle; the railway vehicle runs on the railway track under an electrified railway contact network. The container rail-road transfer system comprises: a lifting device 2 disposed with respect to the railway track, a two-way side pick-up device 4 and a container handling device 1 disposed with respect to a parking position of the container lorry. The railway vehicle in one or more embodiments is a railway container flat car 7 that transports the container 6.

In some embodiments, the two-way side pick-up device 4 is disposed on a carrying platform 3 between the railway track and the parking position of the container lorry; the two-way side pick-up device 4 is used to transfer the container 6 from a position corresponding to the lifting device 2 to a position corresponding to the container handling device 1, and/or, transfer the container 6 from a position corresponding to the container handling device 1 to a position corresponding to the lifting device 2.

In some embodiments, the lifting device 2 is used to lift the container 6 on the railway vehicle and place the container 6 on the two-way side pick-up device 4, and/or to lift the container 6 on the two-way side pick-up device 4 and place the container 6 on the rail vehicle.

In some embodiments, the container handling device 1 is used to lift the container 6 on the container lorry and place the container 6 on the two-way side pick-up device 4, and/or to lift the container 6 on the two-way side pick-up device 4 and place the container 6 on the container lorry.

In some embodiments, when the container 6 on the railway vehicle is transferred to the container lorry, the operating principle of the container rail-road transfer system is as below: after the railway vehicle stops at the loading and unloading station site, the lifting device 2 lifts the container 6; then, the two-way side pick-up device 4 moves to a position corresponding to the lifting device 2 , and the lifting device 2 places the container 6 on the two-way side pick-up device 4; and then, the two-way side pick-up device 4 transfers the container 6 from a side of the railway track to a side of the container lorry, and the container handling device 1 lifts the container 6 on the two-way side pick-up device 4; finally, the two-way side pick-up device 4 returns to its initial position, and the container lorry runs to the parking position corresponding to the container handling device 1; thereafter, the container handling device 1 places the container 6 on the container lorry. In addition, when the container 6 on the container lorry is transferred to the railway vehicle, the operating principle of the container rail-road transfer system is contrary to the above process and will not be described in detail.

With the container rail-road transfer system of the present disclosure, the container 6 on the railway vehicle can be transferred to the container lorry, and/or the container 6 on the container lorry can be transferred to the railway vehicle, without changing the position of the electrified railway contact network, so as to ensure that a space occupied by a container handling area is smaller, thereby making the construction of the entire system convenient and flexible, and well adapted to the design of the existing electrified railway contact network. The two-way side pick-up device 4 enables the container 6 to move horizontally between the railway vehicle and the container lorry, which makes the container transshipment process stable and safe, and avoids the interference between the container rail-road transfer system and the electrified railway contact network during the transshipment process. Due to the adoption of the two-way side pick-up device, the container rail-road transfer system of the present disclosure is simplified and occupies a smaller space, thereby simplifying the transfer procedures and improving the transfer efficiency.

Based on the same inventive concept, referring to Figs. 1 and 2, one or more embodiments of the present disclosure also provides a container rail-road transfer system, which comprises: a lifting device 2 disposed with respect to a railway track, a two-way side pick-up device 4 and a container handling device 1 disposed with respect to a parking position of a container lorry.

In some embodiments, the two-way side pick-up device 4 is disposed on a carrying platform 3 between the railway track and the parking position of the container lorry. The two-way side pick-up device 4 comprises a bridging mechanism 402 and a tray mechanism 401. The bridging mechanism 402 may slide to a position corresponding to the rail track, or, slide to a position corresponding to the parking position of the container lorry. The tray mechanism 401 may slide on the bridging mechanism 402 to a position corresponding to the railway track or a position corresponding to the parking position of the container lorry.

In some embodiments, the lifting device 2 comprises door-shaped support mechanisms disposed at two ends of the carrying platform 3, and a number of container twist lock parts 204 disposed under the top of the door-shaped support mechanisms at two sides. The container twist lock parts 204 are configured to lock the container 6, and the door-shaped support mechanisms are configured to drive the container 6 to rise or drop, so that the container 6 is lifted from the tray mechanism 401 and placed on the railway vehicle, or the container 6 is lifted from the railway vehicle and placed on the tray mechanism 401.

In some embodiments, the container handling device 1 comprises a number of top beams, a number of telescopic columns 101 disposed under the top beams, and a spreader 106 fixed under one of the top beams. The spreader 106 is configured to cooperate with corner fittings at four corners on the top of the container 6 to lock or unlock the container 6. The telescopic columns 101 may be configured to extend or retract so as to drive the container 6 to rise or drop, so that the container 6 is lifted from the tray mechanism 401 and placed on the container lorry, or the container 6 is lifted from the container lorry and placed on the tray mechanism 401.

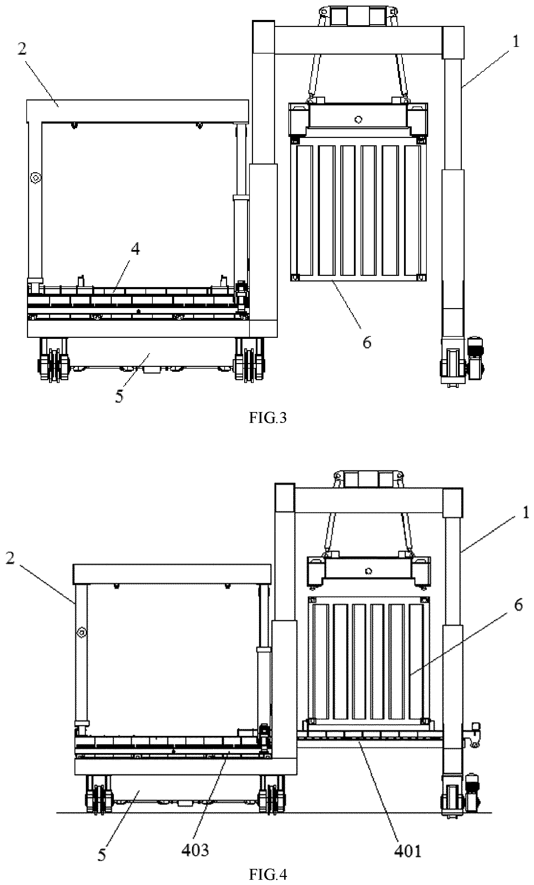

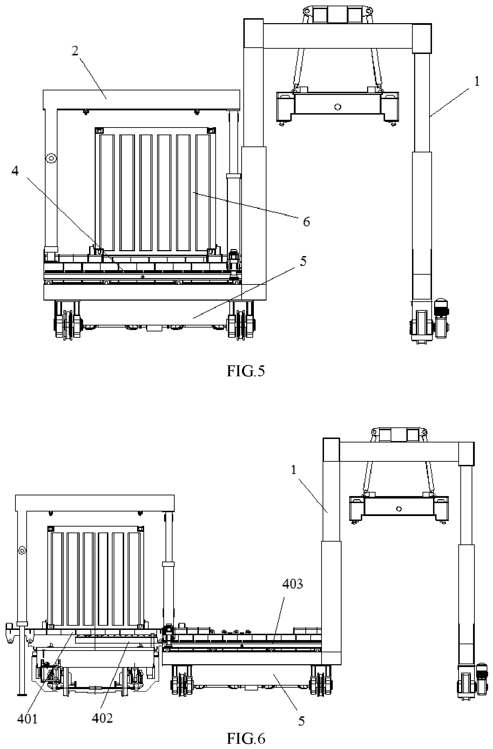

In some embodiments, referring to Figs. 3-7, when the container 6 on the railway vehicle is transferred to the container lorry, the operating principle of the container rail-road transfer system is as below: after the railway vehicle stops at the loading and unloading station site, the lifting device 2 lifts the container 6; then, the bridge mechanism 402 and the tray mechanism 401 of the two-way side pick-up device 4 moves to a position corresponding to the lifting device 2, and the lifting device 2 places the container 6 on the tray mechanism 401; and then, the bridge mechanism 402 and the tray mechanism 401 transfer the container 6 from the railway track side to the container lorry side, and the container handling device 1 lifts the container 6 on the tray mechanism 401; finally, the bridge mechanism 402 and the tray mechanism 401 return to their initial position, and the container lorry runs to the parking position corresponding to the container handling device 1; thereafter, the container handling device 1 places the container 6 on the container lorry. In addition, when the container 6 on the container lorry is transferred to the railway vehicle, the operating principle of the container rail-road transfer system is contrary to the above process and will not be described in detail.

The following describes the container rail-road transfer system provided in the present disclosure in detail with reference to the accompanying drawings and specific embodiments.

The container rail-road transfer system according to one or more embodiments of the present disclosure comprises: a lifting device 2 disposed with respect to a railway track, a two-way side pick-up device 4, and a container handling device 1 disposed with respect to a parking position of a container lorry.

### Example 1

The specific structure of the two-way side pick-up device 4 according to one or more embodiments of the present disclosure will be described below.

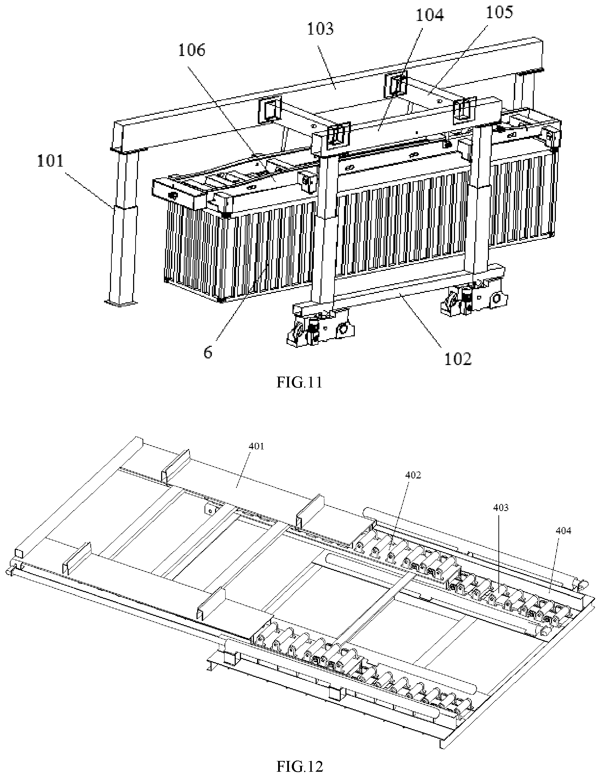

Referring to Figs. 12-20, the two-way side pick-up device 4 comprises a bridging mechanism 402 and a tray mechanism 401. The tray mechanism 401 is slidably disposed on the bridging mechanism 402. The tray mechanism 401 may slide to a position corresponding to the container handling device 1, and/or, slide to a position corresponding to the lifting device 2. The two-way side pick-up device 4 further comprises a raising-and-lowering mechanism 403, which is disposed under the bridging mechanism 402 and is located on the carrying platform 3. The raising-and-lowering mechanism 403 is used to carry and drive the bridging mechanism 402 and the tray mechanism 401 to rise or drop.

The raising-and-lowering mechanism 403 comprises a raising-and-lowering platform 4031, four first telescopic cylinders 4032 and two first slideways 4033 arranged side by side. The four first telescopic cylinders 4032 are arranged on four corners of the bottom of the raising-and-lowering platform 4031, and are used to drive the raising-and-lowering platform 4031 to rise or drop, thereby adjusting a horizontal height of the container 6 during the transfer process to adapt to different heights of the railway container flat car 7. One end of the first telescopic cylinder 4032 is fixed on the carrying platform 3. The first slideway 4033 is disposed on the top of the raising-and-lowering platform 4031 in a direction from the railway track to the container lorry. That is, the direction of the first slideway 4033 is perpendicular to the railway track. The bridging mechanism 402 is slidably disposed on the first slideway 4033.

### Example 2

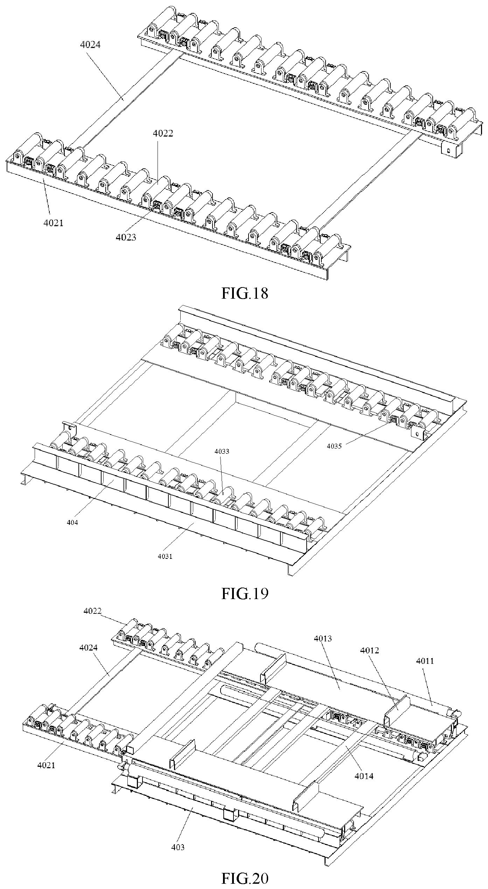

Referring to Fig. 19, the raising-and-lowering mechanism 403 further comprises twelve sets of first limit wheels 4035. Six sets of first limit wheels 4035 are disposed on one first slideway 4033. Two first limit wheels 4035 in each set are respectively disposed on two sides of the first slideway 4033. The twelve sets of first limit wheels 4035 can ensure that the upper bridging mechanism 402 moves along a fixed straight line. The arrangement of the positions of the six sets of first limit wheels 4035 must satisfy that at least two sets of first limit wheels 4035 play the role of fixing and limiting inside the bridging mechanism 402 under any working condition.

A specific structure of the first slideway is described below.

### Example 3

The first slideway 4033 comprises a number of first roller assemblies arranged side by side. The first roller assembly comprises a first wheel seat fixed on the raising-and-lowering platform 4031 and a first roller with both ends hinged on the first wheel seat. The bridging mechanism 402 can slide on the first rollers of the first slideway 4033 to reduce frictional resistance and ensure sufficient container transfer capacity.

Another specific structure of the first slideway 4033 is described below.

### Example 4

The first slideway 4033 is a first slider 4033 fixed on the raising-and-lowering platform 4031, and the bridging mechanism 402 may slide along the first slider 4033.

### Example 5

Referring to Fig. 18, the bridging mechanism 402 comprises first concave groove members 4021 the number of which is the same as the number of the first slideways 4033, two first fixed plates 4024 connected between the first concave groove members 4021, second slideway 4022 disposed on the top of the first concave groove member 4021, a first driving component 4034, and a second driving component. The first concave groove member 4021 is provided with a groove fitted with the first slideway 4033. The groove has an opening facing downward. The first concave groove member 4021 is disposed on and covers the first slideway 4033. The first driving component 4034 is configured to drive the first concave groove member 4021 to extend from an initial position to a railway container flat car 7, or retract from the railway container flat car 7 to the initial position. After the first concave groove member 4021 extends to the railway container flat car 7, a bottom of the first concave groove member 4021 is pressed on a top surface of the railway container flat car 7. The second driving component 4034 is configured to drive the first concave groove member 4021 to extend from the initial position to a parking position of the container lorry, or to retract from the parking position of the container lorry to the initial position. The initial position is directly over the raising-and-lowering platform 4031. The tray mechanism 401 is slidably disposed on the second slide 4022.

### Example 6

Referring to Fig. 18, the bridging mechanism 402 further comprises twelve sets of second limit wheels 4023. Six sets of second limit wheels 4023 are disposed on one second slideway 4022. Two second limit wheels 4023 in each set are respectively disposed on two sides of the second slideway 4022. Twelve sets of second limit wheels 4023 can ensure that an upper tray mechanism 401 moves along a fixed straight line. The arrangement of positions of the six sets of second limit wheels 4023 must satisfy that at least two sets of second limit wheels 4023 play the role of fixing and limiting inside the tray mechanism 401 under any working conditions.

### Example 7

A specific structure of the second slide 4022 is described as below.

The second slideway 4022 comprises a number of second roller assemblies arranged side by side. The second roller assembly comprises a second wheel seat fixed on the first concave groove member 4021 and a second roller with both ends hinged on the second wheel seat. The tray mechanism 401 may slide on the second rollers of the second slideway 4022 to reduce frictional resistance and ensure sufficient container transfer capacity.

### Example 8

Another specific structure of the second slideway 4022 is described below.

The second slideway 4022 is a second slider fixed on the first concave groove member 4021, and the tray mechanism 401 slides along the second slider.

The following describes two different structures of the first driving component 4034 and the second driving component.

### Example 9

The first driving component 4034 comprises a first actuator cylinder and a first connection cylinder fixed at an output end of the first actuator cylinder. The first concave groove member 4021 is provided with a first cylinder hole, and a rod body of the first connection cylinder can extend into or exit from the first cylinder hole. A fixed end of the first actuator cylinder is fixed on the raising-and-lowering platform 4031 of the raising-and-lowering mechanism 403, and the output end of the first actuator cylinder is configured to drive the first connection cylinder and the first concave groove member 4021 to move.

The second driving component comprises a second actuator cylinder and a second connection cylinder fixed at an output end of the second actuator cylinder. The first concave groove member 4021 is provided with a second cylinder hole, and a rod body of the second connection cylinder can be extended into or exit from the second cylinder hole. A fixed end of the second actuator cylinder is fixed on the raising-and-lowering platform 4031 of the raising-and-lowering mechanism 403, and the output end of the second actuator cylinder is configured to drive the second connection cylinder and the first concave groove member 4021 to move.

The first cylinder hole and the second cylinder hole are respectively provided at the diagonal ends of two first concave groove members 4021. When the bridging mechanism 402 slides toward the railway container flat car 7, the first connection cylinder acts and the rod body thereof extends into the first cylinder hole, and the first actuator cylinder pushes the bridging mechanism 402 to extend. During this process, the second connection cylinder and the second actuator cylinder do not work. When the bridging mechanism 402 slides toward the container lorry, the second connection cylinder acts and the rod body thereof extends into the second cylinder hole, and the second actuator cylinder pushes the bridging mechanism 402 to extend. During this process, the first connection cylinder and the first actuator cylinders do not work.

### Example 10

A rack and pinion mechanism can also be used to provide a transfer thrust for the first driving component 4034 and the second driving component.

### Example 11

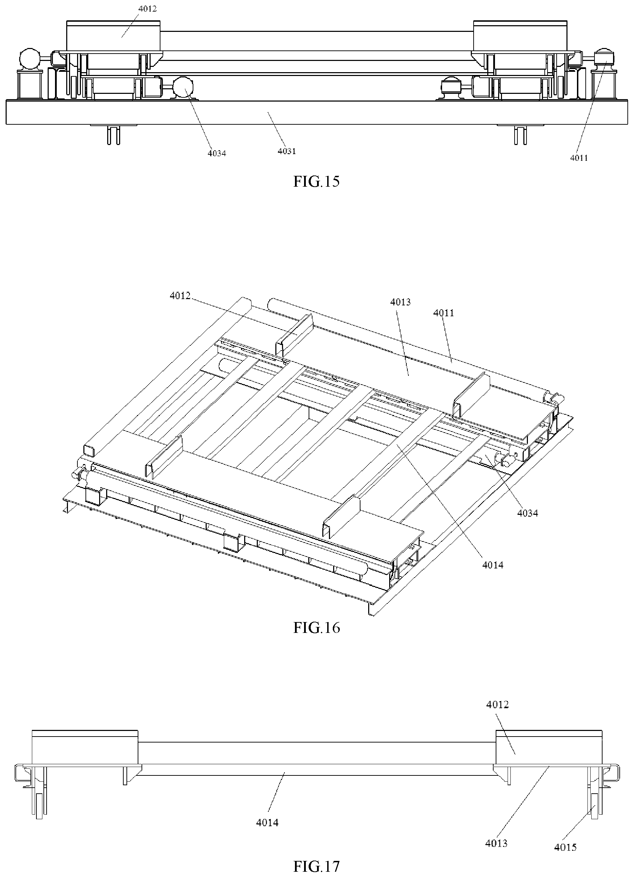

Referring to Fig. 17, the tray mechanism 401 according to one or more embodiments of the present disclosure comprises a second concave groove member 4013 corresponding to the second slideway 4022, two second fixed plates 4014 connected between the second concave groove members 4013, two limit guide stops 4012 disposed on the top of each second concave groove member 4013, two travel wheels 4015 fixed at a side of each of second concave groove members 4013, a third driving component 4011, and a fourth driving component.

The second concave groove member 4013 is provided with a groove matching with the second slideway 4022. The groove is opened downward and covers the second slideway 4022. After the container 6 being placed on the second concave groove member 4013, it is located in the middle of four limit guide stops 4012 to prevent the container 6 from sliding sideways on the tray mechanism 401. The top of the limit guide stop 4012 is configured to be tilted toward the middle thereof to facilitate the placement of the container. After the container 6 is placed on the second concave groove member 4013, a length direction of the container 6 is perpendicular to a length direction of the second concave groove member 4013, and the container 6 is located in the middle position of the tray mechanism 401 with four limit guide stops 4012 limiting the container 6 on both sides. The travel wheel 4015 is rollingly disposed on the raising-and-lowering platform 4031 of the raising-and-lowering mechanism 403. When the bridging mechanism 402 extends from the initial position, one end of the second concave groove member 4013 rests on the second slideway 4022, and another end thereof is supported on the raising-and-lowering platform 4031 by the travel wheel 4015.

The third driving component 4011 is configured to drive the second concave groove member 4013 to extend from an initial position to the railway container flat car 7, or retract from the railway container flat car 7 to the initial position. The fourth driving component is configured to drive the second concave groove member 4013 to extend from the initial position to the parking position of the container lorry, or retract from the parking position of the container lorry to the initial position. The initial position is directly over the raising-and-lowering platform 4031.

Two different structures of the third driving component 4011 and the fourth driving component are described as below.

### Example 12

The third driving component 4011 comprises a third actuator cylinder and a third connection cylinder fixed at an output end of the third actuator cylinder. The second concave groove member 4013 is provided with a third cylinder hole, and a rod body of the third connection cylinder can extend into or exit from the third cylinder hole. A fixed end of the third actuator cylinder is fixed on the raising-and-lowering platform 4031 of the raising-and-lowering mechanism 403, and the output end of the third actuator cylinder is configured to drive the third connection cylinder and the second concave groove member 4013 to move.

The fourth driving component comprises a fourth actuator cylinder and a fourth connection cylinder fixed at an output end of the fourth actuator cylinder. The second concave groove member 4013 is provided with a fourth cylinder hole, and a rod body of the fourth connection cylinder can be extended into or exit from the fourth cylinder hole. The fixed end of the fourth actuator cylinder is fixed on the raising-and-lowering platform 4031 of the raising-and-lowering mechanism 403, and the output end of the fourth actuator cylinder is configured to drive the fourth connection cylinder and the second concave groove member 4013 to move.

The third cylinder hole and the fourth cylinder hole are respectively provided at diagonal ends of two second concave groove members 4013. When the tray mechanism 401 slides toward the railway container flat car 7, the third connection cylinder acts and the rod body thereof extends into the third cylinder hole, and the third actuator cylinder pushes the tray mechanism 401 to extend. During this process, the fourth connection cylinder and the fourth actuator cylinder do not work. When the tray mechanism 401 slides towards the container lorry, the fourth connection cylinder acts and the rod body thereof extends into the fourth cylinder hole, and the fourth actuator cylinder pushes the tray mechanism 401 to extend. During this process, the third connection cylinder and the third actuator cylinder do not work.

### Example 13

A rack and pinion mechanism may also be used to provide a transfer thrust for the third driving component 4011 and the fourth driving component.

### Example 14

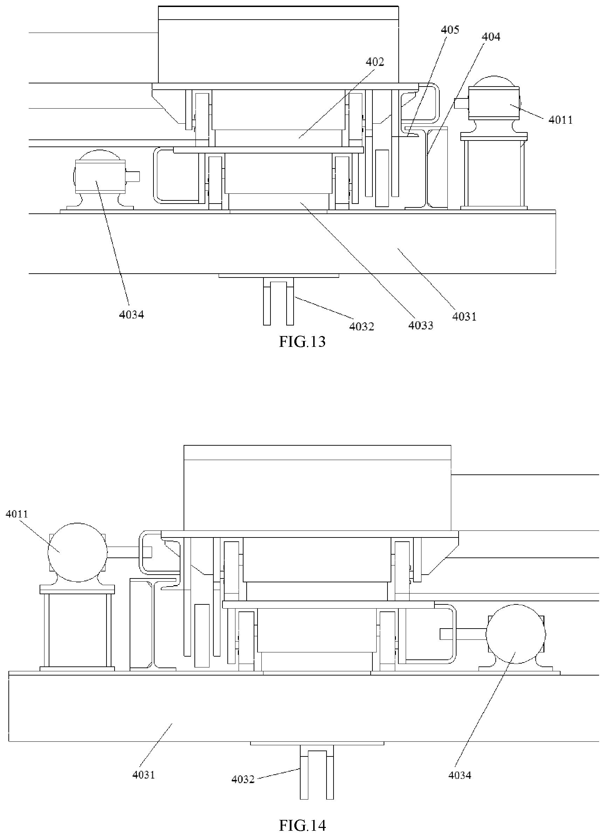

Referring to Figs. 12 and 13, the two-way side pick-up device 4 according to one or more embodiments of the present disclosure further comprises an anti-tipping assembly. The anti-tipping assembly comprises a horizontal plate 405 disposed on a side of the second concave groove member 4013, and a limit frame 404 disposed on the raising-and-lowering platform 4031. The bottom of the limit frame 404 is fixed on the raising-and-lowering platform 4031, and the top thereof is a top plate arranged in parallel with the horizontal plate 405. The horizontal plate 405 is fitted under the top plate with a clearance.

When the tray mechanism 401 is in an extended state relative to the bridging mechanism 402, the anti-tipping assembly can prevent the tray mechanism 401 from tipping under its own weight.

The following describes the lifting device 2 according to the invention.

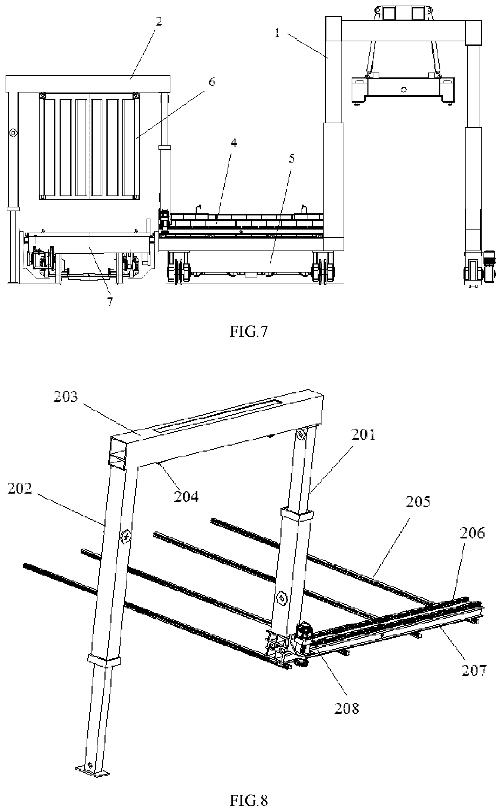

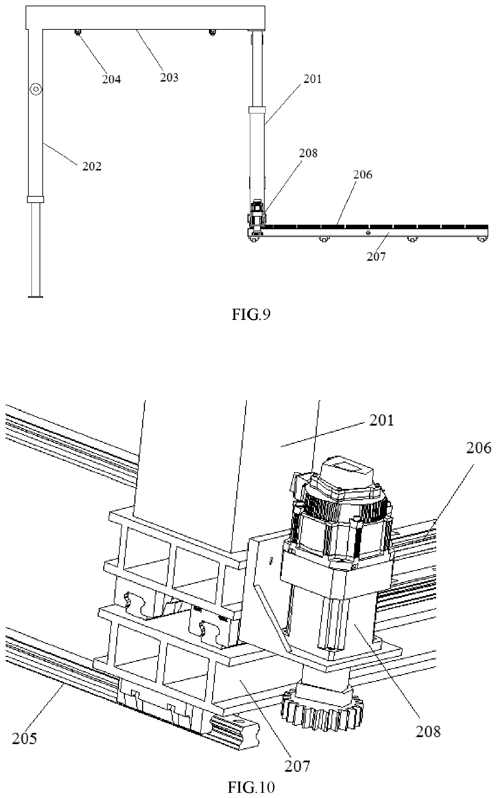

Referring to Figs. 8-10, the lifting device 2 comprises a first track 205 disposed on the carrying platform 3, a second track 206 slidably disposed on the first track 205, door-shaped support mechanisms symmetrically disposed at two ends of the carrying platform 3, two container twist lock parts 204 disposed under the top of the door-shaped support mechanisms at two sides, a first slide driving mechanism, and a second slide driving mechanism.

The first track 205 is arranged along the length direction of the carrying platform 3 and is parallel to the railway track. The second track 206 is arranged perpendicular to the first track 205. Four container twist lock parts 204 are configured to cooperate with corner fittings at four corners on top of the container 6 to lock or unlock the container 6.

The door-shaped support mechanism comprises a first telescopic leg 201, a second telescopic leg 202, and a crossbeam 203. The container twist lock parts 204 are fixed under the crossbeam 203 at two sides. A fixed end of the first telescopic leg 201 is slidably disposed on the second track 206, and a movable end is fixedly connected to one end of the crossbeam 203. A fixed end of the second telescopic leg 202 is fixedly connected to another end of the crossbeam 203, and a movable end is in a suspended state. The first slide driving mechanism is configured to drive the second track 206 to slide along the first track 205. The second slide driving mechanism is configured to drive the door-shaped support mechanisms to slide along the second track 206.

Before raising and lowering the container 6 on the railway container flat car 7, by sliding the door-shaped support mechanisms along the second track 206, the second telescopic leg 202 is extended to the side of the railway track. Thereafter, the door-shaped support mechanisms can be slide along the first track 205 so that the four container twist lock parts 204 on the door-shaped support mechanisms correspond to the positions of the corner fittings on the top of the container 6, and then the second telescopic legs 202 are extended to make themselves fixed on the ground on the side of the railway track.

In one or more embodiments, a first member 207 is fixed on the bottom of the second track 206. The first member 207 is provided with a chute on the bottom thereof, and the chute is adapted to the first track 205. A first actuator cylinder is disposed inside the first telescopic leg 201 to drive the first telescopic leg 201 to extend or retract. A second actuator cylinder is disposed inside the second telescopic leg 202 to drive the second telescopic leg 202 to extend or retract.

The following describes two specific structures of the first slide driving mechanism and the second slide driving mechanism.

### Example 16

The first slide driving mechanism and the second slide driving mechanism are hydraulic cylinders. A fixed end of the first slide driving mechanism is fixed on the carrying platform 3, and an output end thereof is fixedly connected to the first member 207. A fixed end of the second slide driving mechanism is fixed on the first member 207, and an output end thereof is fixedly connected to the first telescopic leg 201.

### Example 17

The first slide driving mechanism is a motored screw. A fixed end of the motored screw is fixed on the carrying platform 3, and an output end thereof is fixedly connected to the first member 207. The second slide driving mechanism is a geared motor 208. A side of the first member 207 is provided as a rack that cooperates with a gear of the geared motor 208. The geared motor 208 is fixed on the first telescopic leg 201. When the geared motor 208 works, the gear rotates relative to the side of the first member 207, and thus drives the first telescopic leg 201 to slide along the second track 206.

The following introduces the container handling device according to one or more embodiments of the present disclosure.

### Example 18

Referring to Fig. 11, the container handling device 1 comprises a first top beam 103, a second top beam 104, a third top beam 105, four telescopic columns 101 connected under the first top beam 103 and the second top beam 104, a spreader 106 fixed under the third top beam 105, and a support beam 102. Two telescopic columns 101 under the first top beam 103 are fixed on the carrying platform 3, and a distance between the telescopic columns 101 is greater than a length of the container 6.

Two telescopic columns 101 under the second top beam 104 are disposed on the ground, and the second top beam 104 is parallel to the first top beam 103. The parking position of the container lorry is between the first top beam 103 and the second top beam 104. The third top beam 105 is fixed between the first top beam 103 and the second top beam 104. The spreader 106 is configured to cooperate with corner fittings at four corners on the top of the container 6 to lock or unlock the container 6. A third actuator cylinder is disposed inside the telescopic column 101 to drive the telescopic column 101 to extend or retract. The support beam 102 is fixed between the telescopic columns 101 under the second top beam 104. After the bridging mechanism 402 is extended, an end of the first concave groove member 4021 is pressed against the support beam 102. The support beam 102 is parallel to the second top beam 104. The support beam 102 makes the structure of the whole device more stable. At the same time, the support beam 102 can provide support for a lateral movement equipment such as the two-way side pick-up device 4 to ensure that the container 6 is stable and safe during the transfer process. Specifically, a side end of the two-way side pick-up device 4 will fall on the support beam 102 when it moves to the side of the container lorry, so that the container 6 can fall between two support points at the bottom of the two-way side pick-up device 4 to ensure a stable support.

The operating principle of the container handling device 1 is as below: when the container 6 on the container lorry is transferred to the railway vehicle, the container lorry travels to the parking position, and the telescopic columns 101 descend synchronously, so that the spreader 106 is lowered and locked with the corner fittings on the top of the container 6; then the telescopic columns 101 rise synchronously to lift the container 6; and then the container lorry drives away from the parking position, so that the lateral movement equipment such as the two-way side pick-up device 4 can transfer the container 6 to the railway vehicle on a side thereof. When the container 6 on the railway vehicle is transferred to the container lorry, the lateral movement equipment such as the two-way side pick-up device 4 transfers the container 6 on the railway vehicle to the parking position of the container lorry, and the telescopic columns 101 of the container handling device 1 descend synchronously so that the spreader 106 is lowered and locked with the corner fittings on the top of the container 6; thereafter, the telescopic columns 101 rise synchronously to lift the container 106, and the lateral movement equipment such as the two-way side pick-up device 4 moves away from the parking position of the container lorry; afterwards, the container lorry enters the parking position, and the telescopic columns 101 descend synchronously to place the container 6 on the container lorry; then the spreader 106 and the corner fittings on the top of the container 6 are unlocked, and the transfer process is completed. In this way, the container handling device 1 can conveniently and quickly realize the lifting or lowering of the container at the position of the collecting lorry, which improves lifting efficiency during the transfer process. Additionally, by adopting the container handling device 1, the container rail-road transfer system is simplified and the cost thereof is reduced.

### Example 19

Referring to Fig. 1, the container rail-road transfer system further comprises a mobile platform 5. The mobile platform 5 comprises a first steel rail, a second steel rail, and a mobile vehicle. The carrying platform 3 is fixed on the mobile vehicle. The first steel rail and the second steel rail are parallel to the railway track. The mobile vehicle is slidably disposed on the first steel rail. The second steel rail is disposed on the ground below the second top beam 104. The bottom of the telescopic column 101 under the second top beam 104 is provided with a roller, and the roller is rollingly disposed on the second steel rail. When the loading and unloading position of the railway container flat car 7 and the loading and unloading position of the container lorry are not in the same place, the two-way side pick-up device 4, the lifting device 2 and the container handling device 1 are moved along the first steel rail and the second steel rail by the moving vehicle, so as to complete container transfer operations at different locations.

The operating principle of the container rail-road transfer system is described in the following.

A container 6 being transferred from a container lorry to a railway container flat car 7 is taken as an example to describe the operating principle. After the container lorry enters a parking position between the first top beam 103 and the second top beam 104 of the container handling device 1, the telescopic columns 101 are retracted synchronously, so that the spreader 106 is lowered to a height that fits with the corner fittings on the top of the container 6. After the spreader 106 locks the container 6, the telescopic columns 101 lift the container 6; the bridging mechanism 402 of the two-way side pick-up device 4 is extended and pressed on the support beam of the container handling device 1, and the tray mechanism 401 is extended and located on the bridging mechanism 402; the telescopic columns 101 place the container 6 between the limit guide stops 4012 of the tray mechanism 401, and the spreader 106 is unlocked from the container 6; the spreader 106 rises, and the tray mechanism 401 retracts to its initial position, and the bridging mechanism 402 also retracts to its initial position. Then, the moving vehicle travels as needed to move the container 6 to the position corresponding to the railway container flat car 7. Afterwards, the bridging mechanism 402 extends to the railway container flat car 7 and presses on the top surface of the railway container flat car 7 (once the bridging mechanism 402 extends beyond the position of a central axis of the railway container flat car 7, the requirements to load the weight of the tray mechanism 401 and the container 6 can be met). The tray mechanism 401 slides on the bridging mechanism 402 to the railway container flat car 7 until the container 6 on the tray mechanism 401 is located right above the railway container flat car 7. At the same time, the lifting device 2 starts to act and slides the door-shaped support mechanisms along the second track 206, and then slides the door-shaped support mechanisms along the first track 205, so that the container twist lock parts 204 on the door-shaped support mechanisms can correspond to the positions of the corner fittings on the top of the container 6. The second telescopic legs 202 are extended to fix the second telescopic legs 202 on the ground on a side of the railroad track; and then the tray mechanism 401 slides on the bridging mechanism 402 toward the railway container flat car 7, until the container 6 on the tray mechanism 401 is located right above the railway container flat car 7. The door-shaped leg mechanisms are retracted so that the container twist lock parts 204 after being lowered can be locked with the corner fittings on the top of the container 6, and then the door-shaped support mechanisms extend to lift the container 6. After that, the tray mechanism 401 and the bridging mechanism 402 are retracted to their initial positions respectively. Finally, the door-shaped support mechanisms are retracted so that the container 6 can be placed on the railway container flat car 7, and the container twist lock parts 204 and the container 6 are unlocked.

In addition, when the container 6 is transferred from the railway container flat car 7 to the container lorry, the operating principle is contrary to the above process and will not be described in detail.

One or more embodiments of the present application described above illustrate the purpose, technical solutions and beneficial effects of the present disclosure in detail. It should be understood that the detailed description and the specific examples are given by way of illustration only and are not intended to limit the present disclosure which is defined by the appended claims.

## Claims

1. A container rail-road transfer system, for transferring a container on a railway vehicle to a container lorry, and/or transferring a container on a container lorry to a railway vehicle; the railway vehicle runs on a railway track under an electrified railway contact network;
the container rail-road transfer system comprises:
a lifting device (2), a two-way side pick-up device (4), and a container handling device (1);
wherein, the two-way side pick-up device (4) is configured to transfer the container from a position corresponding to the lifting device (2) to a position corresponding to the container handling device (1), and/or, transfer the container from a position corresponding to the container handling device (1) to a position corresponding to the lifting device (2);
the lifting device (2) is configured to lift the container on the railway vehicle and place the container on the two-way side pick-up device (4), and/or, lift the container on the two-way side pick-up device (4) and place the container on the railway vehicle;
the container handling device (1) is configured to lift the container on the container lorry and place the container on the two-way side pick-up device, and/or, lift the container on the two-way side pick-up device (4) and place the container on the container lorry,
**characterized in that** the lifting device (2) comprises:
a first track (205) disposed on the carrying platform (3);
a second track (206) slidably disposed on the first track (205)
door-shaped support mechanisms symmetrically disposed on the two ends of the carrying platform (3);
a number of container twist lock parts (204) disposed under the top of the door-shaped support mechanisms at two sides thereof;
a first slide driving mechanism; and
a second slide driving mechanism;
and wherein, the first track (205) is arranged along a length direction of the carrying platform (3), and is parallel to the railway track;
the second track (206) is arranged perpendicular to the first track (205);
the number of container twist lock parts (204) are configured to cooperate with corner fittings at four corners on the top of the container to lock or unlock the container;
the door-shaped support mechanism comprises a first telescopic leg, a second telescopic leg, and a crossbeam;
the container twist lock parts (204) are fixed under the crossbeam on two sides thereof;
an fixed end of the first telescopic leg is slidably disposed on the second track (206), and a movable end of the first telescopic leg is fixedly connected to one end of the crossbeam;
a fixed end of the second telescopic leg is fixedly connected to another end of the crossbeam, and a movable end of the second telescopic leg is suspended;
the first slide driving mechanism is configured to drive the second track (206) to slide along the first track (205);
the second slide driving mechanism is configured to drive the door-shaped support mechanisms to slide along the second track (206); and
before raising and lowering the container of the railway vehicle, the door-shaped support mechanisms are slid along the second track (206) so that the second telescopic leg is extended to a side of the railway track; then the door-shaped support mechanisms are slid along the first track (205) so that the positions of the number of container twist lock parts (204) on the door-shaped support mechanisms correspond to the positions of corner fittings on the top of the container; and then, the second telescopic leg is extended to be fixed on the ground on the side of the railway track.

2. The container rail-road transfer system of claim 1, wherein the two-way side pick-up device (4) comprises a raising-and-lowering mechanism (403), a bridging mechanism (402) and a tray mechanism (401), and wherein:
the raising-and-lowering mechanism (403) is disposed on a carrying platform (3);
the bridging mechanism (402) is slidably disposed on the raising-and-lowering mechanism (403);
the tray mechanism (401) is slidably disposed on the bridging mechanism (402);
the raising-and-lowering mechanism (403) comprises a raising-and-lowering platform (4031), a number of first telescopic cylinders (4032), and a number of first slideways (4033) arranged side by side;
the number of first telescopic cylinders (4032) are arranged on the bottom of the raising-and-lowering platform (4031) to drive the raising-and-lowering platform (4031) to rise or drop; one end of the first telescopic cylinders (4032) is fixed on the carrying platform (3);
the first slideways (4033) are disposed on the top of the raising-and-lowering platform (4031) and extended in a direction from the railway track to the container lorry; and
the bridging mechanism (402) is slidably disposed on the first slideways (4033).

3. The container rail-road transfer system of claim 2, wherein the bridging mechanism (402) comprises:
first concave groove members (4021), the number thereof is the same as the number of the first slideways (4033);
a number of first fixed plates connected between the first concave groove members (4021);
second slideways (4022) disposed on the top of each of the first concave groove members (4021);
a first driving component (4034); and
a second driving component (4034);
and wherein, the first concave groove members (4021) are disposed on and cover the first slideways (4033);
the first driving component (4034) is configured to drive the first concave groove members (4021) to extend from an initial position to the railway track, or to retract from the railway track to the initial position;
the second driving component (4034) is configured to drive the first concave groove members (4021) to extend from the initial position to the parking position of the container lorry, or to retract from the parking position of the container lorry to the initial position; and
the tray mechanism (401) is slidably disposed on the second slideways (4022).

4. The container rail-road transfer system of claim 3, wherein the first driving component (4034) comprises a first actuator cylinder and a first connection cylinder fixed at an output end of the first actuator cylinder;
the first concave groove members (4021) are provided with first cylinder holes, and a rod body of the first connection cylinder can be extended into or exit from the first cylinder holes;
an fixed end of the first actuator cylinder is fixed on the raising-and-lowering platform (4031) of the raising-and-lowering mechanism (403), and the output end of the first actuator cylinder is configured to drive the first connection cylinder and the first concave groove members (4021) to move;
the second driving component (4034) comprises a second actuator cylinder and a second connection cylinder fixed at an output end of the second actuator cylinder;
the first concave groove members (4021) are provided with second cylinder holes, and a rod body of the second connection cylinder can be extended into or exit from the second cylinder holes; and
an fixed end of the second actuator cylinder is fixed on the raising-and-lowering platform (4031) of the raising-and-lowering mechanism (403), and the output end of the second actuator cylinder is configured to drive the second connection cylinder and the first concave groove members (4021) to move.

5. The container rail-road transfer system of claim 3, wherein the tray mechanism (401) comprises:
second concave groove members (4013), the number thereof is the same as the number of the second slideways (4022);
a number of second fixed plates connected between the second concave groove members (4013);
a number of limit guide stops disposed on the top of the second concave groove members (4013);
a number of travel wheels fixed on the side of the second concave groove members (4013);
a third driving component (4011); and
a fourth driving component;
and wherein, the second concave groove members (4013) are disposed on and cover the second slideways (4022);
the container is positioned between the limit guide stops after the container is placed on the second concave groove members (4013);
the travel wheels are rollingly disposed on the raising-and-lowering platform (4031) of the raising-and-lowering mechanism (403);
the third driving component (4011) is configured to drive the second concave groove members (4013) to extend from an initial position to the railway track, or to retract from the railway track to the initial position; and
the fourth driving component is configured to drive the second concave groove members (4013) to extend from an initial position to the parking position of the container lorry, or to retract from the parking position of the container lorry to the initial position.

6. The container rail-road transfer system of claim 5, wherein the third driving component (4011) comprises a third actuator cylinder and a third connection cylinder fixed at an output end of the third actuator cylinder;
the second concave groove members (4013) are provided with third cylinder holes, and a rod body of the third connection cylinder can be extended into or exit from the third cylinder holes;
a fixed end of the third actuator cylinder is fixed on the raising-and-lowering platform (4031) of the raising-and-lowering mechanism, and the output end of the third actuator cylinder is configured to drive the third connection cylinder and the second concave groove members (4013) to move;
the fourth driving component comprises a fourth actuator cylinder and a fourth connection cylinder fixed at an output end of the fourth actuator cylinder;
the second concave groove members (4013) are provided with fourth cylinder holes, and a rod body of the fourth connection cylinder can be extended into or exit from the fourth cylinder holes; and
a fixed end of the fourth actuator cylinder is fixed on the raising-and-lowering platform (4031), and the output end of the fourth actuator cylinder is configured to drive the fourth connection cylinder and the second concave groove members (4013) to move.

7. The container rail-road transfer system of claim 3, wherein the container handling device (1) comprises:
a first top beam (103);
a second top beam (104);
a third top beam (105);
a number of telescopic columns connected under the first top beam (103) and the second top beam (104);
a spreader fixed under the third top beam (105); and
a support beam fixed between the telescopic columns under the second top beam (104);
and wherein, the telescopic columns under the first top beam (103) are fixed on the carrying platform (3), and a distance between the telescopic columns is greater than a length of the container;
the telescopic columns under the second top beam (104) are disposed on the ground; the second top beam (104) is parallel to the first top beam (103); and the parking position of the container lorry is between the first top beam (103) and the second top beam (104);
the third top beam (105) is fixed between the first top beam (103) and the second top beam (104);
the spreader is configured to cooperate with corner fittings at four corners on the top of the container to lock or unlock the container;
the third actuator cylinder is provided inside the telescopic columns, and the third actuator cylinder is configured to drive the telescopic columns to extend or retract; and
an end portion of the first concave groove members (4021) is pressed on the support beam after the bridging mechanism (402) being extended.

8. The container rail-road transfer system of claim 7, further comprising a mobile platform;
the mobile platform comprises a first steel rail, a second steel rail and a mobile vehicle,
and wherein, the carrying platform (3) is fixed on the mobile vehicle;
the first steel rail and the second steel rail are parallel to the railway track;
the mobile vehicle is slidably disposed on the first steel rail;
the second steel rail is disposed on the ground under the second top beam (104); and
a roller is disposed at the bottom of the telescopic columns under the second top beam (104), and the roller is rollingly disposed on the second steel rail.

9. The container rail-road transfer system of claim 1, wherein the two-way side pick-up device (4) comprises a bridging mechanism (402) and a tray mechanism (401);
and wherein, the bridging mechanism (402) is configured to slide to a position corresponding to the railway track, or slide to a position corresponding to the parking position of the container lorry; and the tray mechanism (401) is configured to slide on the bridging mechanism (402) to a position corresponding to the railway track or to a position corresponding to the parking position of the container lorry;
the lifting device (2) comprises:
door-shaped support mechanisms disposed at two ends of a carrying platform (3); and
a number of container twist lock parts (204) disposed under the top of the door leg mechanisms at two sides thereof;
and wherein, the container twist lock parts (204) are configured to lock a container; the door-shaped support mechanisms are configured to drive the container to rise or drop, so that the container is lifted from the tray mechanism (401) and placed on the railway vehicle, or the container is lifted from the railway vehicle and placed on the tray mechanism (401);
the container handling device (1) comprises:
a number of top beams;
a number of telescopic columns disposed under the top beams; and
a spreader fixed under one of the top beams;
and wherein, the spreader is configured to cooperate with corner fittings at four corners on the top of the container to lock or unlock the container; the telescopic columns are configured to extend or retract to drive the container to rise or drop, so that the container is lifted from the tray mechanism (401) and placed on the container lorry, or the container is lifted from the container lorry and placed on the tray mechanism (401).

## Patentansprüche

1. Containertransfersystem zwischen Schiene und Straße zum Transferieren eines Containers auf einem Eisenbahnfahrzeug auf einen Containerlastwagen und/oder Transferieren eines Containers auf einem Containerlastwagen auf ein Eisenbahnfahrzeug; das Eisenbahnfahrzeug rollt auf einem Eisenbahngleis unter einem elektrifizierten Eisenbahnkontaktnetz;
das Containertransfersystem zwischen Schiene und Straße umfasst Folgendes:
eine Hebevorrichtung (2), eine wechselseitige Seitenaufnahmevorrichtung (4) und eine Containerhandhabungsvorrichtung (1);
wobei die wechselseitige Seitenaufnahmevorrichtung (4) konfiguriert ist, um den Container von einer Position, die der Hebevorrichtung (2) entspricht, in eine Position zu transferieren, die der Containerhandhabungsvorrichtung (1) entspricht, und/oder den Container von einer Position, die der Containerhandhabungsvorrichtung (1) entspricht, in eine Position zu transferieren, die der Hebevorrichtung (2) entspricht;
die Hebevorrichtung (2) konfiguriert ist, um den Container auf dem Eisenbahnfahrzeug zu heben und den Container auf die wechselseitige Seitenaufnahmevorrichtung (4) zu platzieren und/oder den Container auf der wechselseitigen Seitenaufnahmevorrichtung (4) zu heben und den Container auf das Eisenbahnfahrzeug zu platzieren;
die Containerhandhabungsvorrichtung (1) konfiguriert ist, um den Container auf dem Containerlastwagen zu heben und den Container auf die wechselseitige Seitenaufnahmevorrichtung zu platzieren und/oder den Container auf der wechselseitigen Seitenaufnahmevorrichtung (4) zu heben und den Container auf den Containerlastwagen zu platzieren,
**dadurch gekennzeichnet, dass** die Hebevorrichtung (2) Folgendes umfasst:
ein erstes Gleis (205), das auf der Trageplattform (3) angeordnet ist,
und ein zweites Gleis (206), das gleitbar auf dem ersten Gleis (205) angeordnet ist,
türförmige Tragemechanismen, die symmetrisch auf der Trageplattform (3) mit zwei Enden angeordnet sind,
eine Anzahl von Container-Twistlock-Teilen (204), die unter der oberen Seite der türförmigen Tragemechanismen auf zwei Seiten davon angeordnet sind;
einen ersten Gleitantriebsmechanismus; und
einen zweiten Gleitantriebsmechanismus;
und wobei das erste Gleis (205) entlang einer Längsrichtung der Trageplattform (3) angeordnet ist und parallel zum Eisenbahngleis ist;
das zweite Gleis (206) senkrecht zum ersten Gleis (205) angeordnet ist;
eine Anzahl von Container-Twistlock-Teilen (204) konfiguriert ist, um mit Eckbeschlägen an vier Ecken der oberen Seite des Containers zusammenzuarbeiten, um den Container zu verriegeln oder zu entriegeln;
der türförmige Tragemechanismus einen ersten teleskopischen Fuß, einen zweiten teleskopischen Fuß und einen Querbalken umfasst;
die Container-Twistlock-Teile (204) unter dem Querbalken auf zwei Seiten davon befestigt sind;
ein festes Ende des ersten teleskopischen Fußes gleitbar auf dem zweiten Gleis (206) angeordnet ist und ein bewegliches Ende des ersten teleskopischen Fußes fest mit einem Ende des Querbalkens verbunden ist;
ein festes Ende des zweiten teleskopischen Fußes fest mit einem anderen Ende des Querbalkens verbunden ist und ein bewegliches Ende des zweiten teleskopischen Fußes aufgehängt ist;
der erste Gleitantriebsmechanismus konfiguriert ist, um das zweite Gleis (206) anzutreiben, um entlang des ersten Gleises (205) zu gleiten;
der zweite Gleitantriebsmechanismus konfiguriert ist, um die türförmigen Tragemechanismen anzutreiben, um entlang des zweiten Gleises (206) zu gleiten; und
vor dem Heben und Senken des Containers des Eisenbahnfahrzeugs die türförmigen Tragemechanismen entlang dem zweiten Gleis (206) geglitten werden, so dass sich der zweite teleskopische Fuß auf eine Seite des Eisenbahngleises erweitert; dann die türförmigen Tragemechanismen entlang dem ersten Gleis (205) geglitten werden, so dass die Positionen der Anzahl von Container-Twistlock-Teilen (204) auf den türförmigen Tragemechanismen den Positionen der Eckbeschläge auf der oberen Seite des Containers entsprechen; und sich dann der zweite teleskopische Fuß erweitert, um auf den Boden auf der Seite des Eisenbahngleises befestigt zu sein.

2. Containertransfersystem zwischen Gleis und Straße nach Anspruch 1, wobei die wechselseitige Seitenaufnahmevorrichtung (4) einen Hebe-und-Senk-Mechanismus (403), einen Überbrückungsmechanismus (402) und einen Ablagemechanismus (401) umfasst, und wobei:
der Hebe-und-Senk-Mechanismus (403) auf einer Trageplattform (3) angeordnet ist,
der Überbrückungsmechanismus (402) gleitbar auf dem Hebe-und-Senk-Mechanismus (403) angeordnet ist;
der Ablagemechanismus (401) gleitbar auf dem Überbrückungsmechanismus (402) angeordnet ist;
der Hebe-und-Senk-Mechanismus (403) eine Hebe-und-Senk-Plattform (4031), eine Anzahl von ersten teleskopischen Zylindern (4032) und eine Anzahl von ersten Gleitführungen (4033) umfasst, die Seite an Seite angeordnet sind;
die Anzahl von ersten teleskopischen Zylindern (4032) auf dem Boden der Hebe-und-Senk-Plattform (4031) angeordnet ist, um die Hebe-und-Senk-Plattform (4031) zu heben oder abzusetzen; ein Ende des ersten teleskopischen Zylinders (4032) auf der Trageplattform (3) befestigt ist;
die ersten Gleitführungen (4033) auf der oberen Seite der Hebe-und-Senk-Plattform (4031) angeordnet sind und sich in einer Richtung vom Eisenbahngleis zum Containerlastwagen erweitern; und
der Überbrückungsmechanismus (402) gleitbar auf den ersten Gleitführungen (4033) angeordnet ist.

3. Containertransfersystem zwischen Gleis und Straße nach Anspruch 2, wobei der Überbrückungsmechanismus (402) Folgendes umfasst:
erste konkave Nutelemente (4021), wobei die Anzahl davon die gleiche ist wie die Anzahl von ersten Gleitführungen (4033);
eine Anzahl von ersten festen Platten, die zwischen den ersten konkaven Nutelementen (4021) verbunden ist;
zweite Gleitführungen (4022), die auf der oberen Seite jeder der ersten konkaven Nutelemente (4021) angeordnet sind;
eine erste Antriebskomponente (4034); und
eine zweite Antriebskomponente (4034);
und wobei die ersten konkaven Nutelemente (4021) gleitbar auf der ersten Gleitführung (4033) angeordnet sind und diese bedecken;
die erste Antriebskomponente (4034) konfiguriert ist, um die ersten konkaven Nutelemente (4021) anzutreiben, um sich von einer anfänglichen Position zum Eisenbahngleis zu erstrecken, oder um sich vom Eisenbahngleis in die anfängliche Position zurückzuziehen;
die zweite Antriebskomponente (4034) konfiguriert ist, um die ersten konkaven Nutelemente (4021) anzutreiben, um sich von der anfänglichen Position in die Parkposition des Containerlastwagens zu erstrecken oder sich von der Parkposition des Containerlastwagens in die anfängliche Position zurückzuziehen; und
der Ablagemechanismus (401) gleitbar auf den zweiten Gleitführungen (4022) angeordnet ist.

4. Containertransfersystem zwischen Schiene und Strasse nach Anspruch 3, wobei die erste Antriebskomponente (4034) einen ersten Antriebszylinder und einen ersten Verbindungszylinder umfasst, der an ein Ausgabeende des ersten Antriebszylinders befestigt ist;
die ersten konkaven Nutelemente (4021) mit ersten Zylinderbohrungen versehen sind und ein Stangenkörper des ersten Verbindungszylinders sich in die ersten Zylinderbohrungen erweitern oder von diesen austreten kann;
ein festes Ende des ersten Antriebszylinders auf der Hebe-und-Senk-Plattform (4031) des Hebe-und-Senk-Mechanismus (403) befestigt ist und das Ausgabeende des ersten Antriebszylinders konfiguriert ist, um den ersten Verbindungszylinder und die ersten konkaven Nutelemente (4021) in Bewegung zu versetzen;
die zweite Antriebskomponente (4034) einen zweiten Antriebszylinder und einen zweiten Verbindungszylinder umfasst, der an ein Ausgabeende des zweiten Antriebszylinders befestigt ist;
die ersten konkaven Nutelemente (4021) mit zweiten Zylinderbohrungen versehen sind und ein Stangenkörper des zweiten Verbindungszylinders sich in die ersten Zylinderbohrungen erweitern oder von diesen austreten kann; und
ein festes Ende des zweiten Antriebszylinders auf der Hebe-und-Senk-Plattform (4031) des Hebe-und-Senk-Mechanismus (403) befestigt ist und das Ausgabeende des zweiten Antriebszylinders konfiguriert ist, um den zweiten Verbindungszylinder und die ersten konkaven Nutelemente (4021) in Bewegung zu versetzen.

5. Containertransfersystem zwischen Schiene und Strasse nach Anspruch 3, wobei der Ablagemechanismus (401) Folgendes umfasst:
zweite konkave Nutelemente (4013), wobei die Anzahl davon die gleiche ist wie die Anzahl von zweiten Gleitführungen (4022);
eine Anzahl von zweiten festen Platten, die zwischen den zweiten konkaven Nutelementen (4013) verbunden ist;
eine Anzahl von Grenzführungsstopps, auf der oberen Seite der zweiten konkaven Nutelemente (4013) angeordnet ist;
eine Anzahl von Laufrädern, die an der Seite der zweiten konkaven Nutelemente (4013) befestigt ist;
eine dritte Antriebskomponente (4011); und
eine vierte Antriebskomponente;
und wobei die zweiten konkaven Nutelemente (4013) auf den zweiten Gleitführungen (4022) angeordnet sind und diese bedecken;
der Container zwischen den Grenzführungsstopps angeordnet ist, nachdem der Container auf den zweiten konkaven Nutelementen (4013) platziert ist;
die Laufräder rollend auf der Hebe-und-Senk-Plattform (4031) des Hebe-und-Senk-Mechanismus (403) angeordnet sind;
die dritte Antriebskomponente (4011) konfiguriert ist, um die zweiten konkaven Nutelemente (4013) anzutreiben, um sich von einer anfänglichen Position zum Eisenbahngleis zu erstrecken, oder um sich vom Eisenbahngleis in die anfängliche Position zurückzuziehen; und
die vierte Antriebskomponente konfiguriert ist, um die zweiten konkaven Nutelemente (4013) anzutreiben, um sich von einer anfänglichen Position in die Parkposition des Containerlastwagens zu erstrecken oder sich von der Parkposition des Containerlastwagens in die anfängliche Position zurückzuziehen.

6. Containertransfersystem zwischen Schiene und Strasse nach Anspruch 5, wobei die dritte Antriebskomponente (4011) einen dritten Antriebszylinder und einen dritten Verbindungszylinder umfasst, der an ein Ausgabeende des dritten Antriebszylinders befestigt ist;
die zweiten konkaven Nutelemente (4013) mit dritten Zylinderbohrungen versehen sind und ein Stangenkörper des dritten Verbindungszylinders sich in die ersten Zylinderöffnungen erweitern oder vom dritten Zylinder austreten kann;
ein festes Ende des dritten Antriebszylinders auf der Hebe-und-Senk-Plattform (4031) des Hebe-und-Senk-Mechanismus befestigt ist und das Ausgabeende des dritten Antriebszylinders konfiguriert ist, um den dritten Verbindungszylinder und die zweiten konkaven Nutelemente (4013) in Bewegung zu versetzen;
die vierte Antriebskomponente einen vierten Antriebszylinder und einen vierten Verbindungszylinder umfasst, der an ein Ausgabeende des vierten Antriebszylinders befestigt ist;
die zweiten konkaven Nutelemente (4013) mit vierten Zylinderbohrungen versehen sind und ein Stangenkörper des vierten Verbindungszylinders sich in die vierten Zylinderlöcher erweitern oder von diesen austreten kann; und
ein festes Ende des vierten Antriebszylinders auf der Hebe-und-Senk-Plattform (4031) befestigt ist und das Ausgabeende des vierten Antriebszylinders konfiguriert ist, um den vierten Verbindungszylinder und die zweiten konkaven Nutelemente (4013) in Bewegung zu versetzen.

7. Containertransfersystem zwischen Schiene und Strasse nach Anspruch 3, wobei die Containerhandhabungsvorrichtung (1) Folgendes umfasst:
einen ersten oberen Balken (103);
einen zweiten oberen Balken (104);
einen dritten oberen Balken (105);
eine Anzahl von teleskopischen Säulen, die unter dem ersten oberen Balken (103) und dem zweiten oberen Balken (104) verbunden ist;
eine Spreizvorrichtung, die unter dem dritten oberen Balken (105) befestigt ist; und
einen Tragebalken, der zwischen den teleskopischen Säulen und dem zweiten oberen Balken (104) befestigt ist;
und wobei die teleskopischen Säulen unter dem ersten oberen Balken (103) auf der Trageplattform (3) befestigt sind und ein Abstand zwischen den teleskopischen Säulen grösser als eine Länge des Containers ist;
die teleskopischen Säulen unter dem zweiten oberen Balken (104) auf dem Boden angeordnet sind; der zweite obere Balken (104) parallel zum ersten oberen Balken (103) ist; und die Parkposition des Containerlastwagens zwischen dem ersten oberen Balken (103) und dem zweiten oberen Balken (104) ist;
der dritte obere Balken (105) zwischen dem ersten oberen Balken (103) und dem zweiten oberen Balken (104) befestigt ist;
die Spreizvorrichtung konfiguriert ist, um mit Eckbeschlägen an vier Ecken auf der oberen Seite des Containers zusammenzuarbeiten, um den Container zu verriegeln oder zu entriegeln;
der dritte Antriebszylinder innerhalb der teleskopischen Säulen bereitgestellt ist und der dritte Antriebszylinder konfiguriert ist, um die teleskopischen Säulen anzutreiben, um sich zu erweitern und zurückzuziehen; und
ein Endabschnitt der ersten konkaven Nutelemente (4021) auf den Tragebalken gedrückt ist, nachdem der Überbrückungsmechanismus (402) erweitert wurde.

8. Containertransfersystem zwischen Schiene und Strasse nach Anspruch 7, weiter umfassend eine bewegliche Plattform;
wobei die bewegliche Plattform eine erste Stahlschiene, eine zweite Stahlschiene und ein bewegliches Fahrzeug umfasst,
und wobei die Trageplattform (3) auf das bewegliche Fahrzeug befestigt ist;
die erste Stahlschiene und die zweite Stahlschiene parallel zum Eisenbahngleis sind;
das bewegliche Fahrzeug gleitbar auf der ersten Stahlschiene angeordnet ist;
die zweite Stahlschiene auf dem Boden unter dem zweiten oberen Balken (104) angeordnet ist; und
eine Walze auf dem Boden der teleskopischen Säulen unter dem zweiten oberen Balken (104) angeordnet ist, und die Walze rollend auf der zweiten Stahlschiene angeordnet ist.

9. Containertransfersystem zwischen Schiene und Strasse nach Anspruch 1, wobei die wechselseitige Seitenaufnahmevorrichtung (4) einen Überbrückungsmechanismus (402) und einen Ablagemechanismus (401) umfasst;
und wobei der Überbrückungsmechanismus (402) konfiguriert ist, um in eine Position zu gleiten, die dem Eisenbahngleis entspricht, oder in eine Position zu gleiten, die der Parkposition des Containerlastwagens entspricht; und der Ablagemechanismus (401) konfiguriert ist, um auf dem Überbrückungsmechanismus (402) in eine Position zu gleiten, die dem Eisenbahngleis entspricht, oder in eine Position, die der Parkposition des Containerlastwagens entspricht;
die Hebevorrichtung (2) Folgendes umfasst:
türförmige Tragemechanismen, die an zwei Enden einer Trageplattform (3) angeordnet sind;
und eine Anzahl von Container-Twistlock-Teilen (204), die unter der oberen Seite der Türfußmechanismus an zwei Seiten davon angeordnet sind;
und wobei die Container-Twistlock-Teile (204) konfiguriert sind, um einen Container zu verriegeln; die türförmigen Tragemechanismen konfiguriert sind, um den Container anzutreiben, um sich zu heben oder abzusetzen, so dass der Container vom Ablagemechanismus (401) gehoben wird und auf das Eisenbahnfahrzeug platziert wird, oder der Container vom Eisenbahnfahrzeug gehoben wird und auf den Ablagemechanismus (401) platziert wird;
die Containerhandhabungsvorrichtung (1) Folgendes umfasst:
eine Anzahl von oberen Balken;
eine Anzahl von teleskopischen Säulen, die unter den oberen Balken platziert ist;
und eine Spreizvorrichtung, die unter einem der oberen Balken befestigt ist;
und wobei die Spreizvorrichtung konfiguriert ist, um mit Eckbeschlägen an vier Ecken der oberen Seite des Containers zusammenzuarbeiten, um den Container zu verriegeln oder zu entriegeln; die teleskopischen Säulen konfiguriert sind, um sich zu erweitern und zurückzuziehen, um den Container anzutreiben, um sich zu heben oder abzusetzen, so dass der Container vom Ablagemechanismus (401) gehoben und auf den Containerlastwagen platziert wird oder der Container vom Containerlastwagen gehoben und auf den Ablagemechanismus (401) platziert wird.

## Revendications

1. Système de transfert rail-route de conteneurs, pour transférer un conteneur sur un véhicule ferroviaire vers un camion porte-conteneurs, et/ou transférer un conteneur sur un camion porte-conteneurs vers un véhicule ferroviaire ; le véhicule ferroviaire circule sur une voie ferrée sous un réseau de contact ferroviaire électrifié ;
le système de transfert rail-route de conteneurs comprend :
un dispositif de levage (2), un dispositif de prélèvement latéral bidirectionnel (4), et un dispositif de manipulation de conteneur (1) ;
dans lequel, le dispositif de prélèvement latéral bidirectionnel (4) est configuré pour transférer le conteneur d'une position correspondant au dispositif de levage (2) à une position correspondant au dispositif de manipulation de conteneur (1), et/ou, transférer le conteneur d'une position correspondant au dispositif de manipulation de conteneur (1) à une position correspondant au dispositif de levage (2) ;
le dispositif de levage (2) est configuré pour soulever le conteneur sur le véhicule ferroviaire et placer le conteneur sur le dispositif de prélèvement latéral bidirectionnel (4), et/ou, soulever le conteneur sur le dispositif de prélèvement latéral bidirectionnel (4) et placer le conteneur sur le véhicule ferroviaire ;
le dispositif de manipulation de conteneur (1) est configuré pour soulever le conteneur sur le camion porte-conteneurs et placer le conteneur sur le dispositif de prélèvement latéral bidirectionnel, et/ou, soulever le conteneur sur le dispositif de prélèvement latéral bidirectionnel (4) et placer le conteneur sur le camion porte-conteneurs,
**caractérisé en ce que** le dispositif de levage (2) comprend :
une première piste (205) disposée sur la plate-forme de transport (3) ;
une deuxième piste (206) disposée de façon coulissante sur la première piste (205)
des mécanismes de support en forme de porte disposés de façon symétrique sur les deux extrémités de la plate-forme de transport (3) ;
une pluralité de parties de verrou tournant de conteneur (204) disposées sous le dessus des mécanismes de support en forme de porte sur les deux côtés de ceux-ci ;
un premier mécanisme d'entraînement coulissant ; et
un deuxième mécanisme d'entraînement coulissant ;
et dans lequel, la première piste (205) est agencée le long d'une direction de longueur de la plate-forme de transport (3), et est parallèle à la voie ferrée ;
la deuxième piste (206) est agencée perpendiculairement à la première piste (205) ;
la pluralité de parties de verrou tournant de conteneur (204) est configurée pour coopérer avec des pièces de coin aux quatre coins sur le dessus du conteneur pour verrouiller ou déverrouiller le conteneur ;
le mécanisme de support en forme de porte comprend un premier pied télescopique, un deuxième pied télescopique, et une traverse ;
les parties de verrou tournant de conteneur (204) sont fixées sous la traverse sur les deux côtés de celle-ci ;
une extrémité fixe du premier pied télescopique est disposée de façon coulissante sur la deuxième piste (206), et une extrémité mobile du premier pied télescopique est raccordée de façon fixe à une extrémité de la traverse ;
une extrémité fixe du deuxième pied télescopique est raccordée de façon fixe à une autre extrémité de la traverse, et une extrémité mobile du deuxième pied télescopique est suspendue ;
le premier mécanisme d'entraînement coulissant est configuré pour entraîner la deuxième piste (206) de façon à coulisser le long de la première piste (205) ;
le deuxième mécanisme d'entraînement coulissant est configuré pour entraîner les mécanismes de support en forme de porte de façon à coulisser le long de la deuxième piste (206) ; et
avant de lever et d'abaisser le conteneur du véhicule ferroviaire, les mécanismes de support en forme de porte sont amenés à coulisser le long de la deuxième piste (206) de sorte que le deuxième pied télescopique est déployé jusqu'à un côté de la voie ferrée ; ensuite, les mécanismes de support en forme de porte sont amenés à coulisser le long de la première piste (205) de sorte que les positions de la pluralité de parties de verrou tournant de conteneur (204) sur les mécanismes de support en forme de porte correspondent aux positions de pièces de coin sur le dessus du conteneur ; et ensuite, le deuxième pied télescopique est déployé de façon à être fixé sur le sol sur le côté de la voie ferrée.

2. Système de transfert rail-route de conteneurs selon la revendication 1, dans lequel le dispositif de prélèvement latéral bidirectionnel (4) comprend un mécanisme de levage et d'abaissement (403), un mécanisme de pontage (402) et un mécanisme de plateau (401), et dans lequel :
le mécanisme de levage et d'abaissement (403) est disposé sur une plate-forme de transport (3) ;
le mécanisme de pontage (402) est disposé de façon coulissante sur le mécanisme de levage et d'abaissement (403) ;
le mécanisme de plateau (401) est disposé de façon coulissante sur le mécanisme de pontage (402) ;
le mécanisme de levage et d'abaissement (403) comprend une plate-forme de levage et d'abaissement (4031), une pluralité de premiers vérins télescopiques (4032), et une pluralité de premières glissières (4033) agencés côte à côte ;
la pluralité de premiers vérins télescopiques (4032) sont agencés sur le bas de la plate-forme de levage et d'abaissement (4031) pour entraîner la plate-forme de levage et d'abaissement (4031) de façon à se lever ou s'abaisser ; une extrémité des premiers vérins télescopiques (4032) est fixée sur la plate-forme de transport (3) ;
les premières glissières (4033) sont disposées sur le dessus de la plate-forme de levage et d'abaissement (4031) et déployées dans une direction de la voie ferrée vers le camion porte-conteneurs ; et
le mécanisme de pontage (402) est disposé de façon coulissante sur les premières glissières (4033).

3. Système de transfert rail-route de conteneurs selon la revendication 2, dans lequel le mécanisme de pontage (402) comprend :
des premiers éléments à rainure concave (4021), leur nombre étant le même que le nombre des premières glissières (4033) ;
une pluralité de premières plaques fixes reliées entre les premiers éléments à rainure concave (4021) ;
des deuxièmes glissières (4022) disposées sur le dessus de chacun des premiers éléments à rainure concave (4021) ;
un premier composant d'entraînement (4034) ; et
un deuxième composant d'entraînement (4034) ;
et dans lequel, les premiers éléments à rainure concave (4021) sont disposés sur les premières glissières (4033) et les recouvrent ;
le premier composant d'entraînement (4034) est configuré pour entraîner les premiers éléments à rainure concave (4021) de façon à se déployer d'une position initiale à la voie ferrée, ou se rétracter de la voie ferrée à la position initiale ;
le deuxième composant d'entraînement (4034) est configuré pour entraîner les premiers éléments à rainure concave (4021) de façon à se déployer de la position initiale à la position de stationnement du camion porte-conteneurs, ou se rétracter de la position de stationnement du camion porte-conteneurs à la position initiale ; et
le mécanisme de plateau (401) est disposé de façon coulissante sur les deuxièmes glissières (4022).

4. Système de transfert rail-route de conteneurs selon la revendication 3, dans lequel le premier composant d'entraînement (4034) comprend un premier vérin de commande et un premier vérin de raccordement fixé à une extrémité de sortie du premier vérin de commande ;
les premiers éléments à rainure concave (4021) sont pourvus de premier trous de vérin, et un corps de tige du premier vérin de raccordement peut être déployé dans les premier trous de vérin ou sortir de ceux-ci ;
une extrémité fixe du premier vérin de commande est fixée sur la plate-forme de levage et d'abaissement (4031) du mécanisme de levage et d'abaissement (403), et l'extrémité de sortie du premier vérin de commande est configurée pour entraîner le premier vérin de raccordement et les premiers éléments à rainure concave (4021) de façon à se déplacer ;
le deuxième composant d'entraînement (4034) comprend un deuxième vérin de commande et un deuxième vérin de raccordement fixé à une extrémité de sortie du deuxième vérin de commande ;
les premiers éléments à rainure concave (4021) sont pourvus de deuxièmes trous de vérin, et un corps de tige du deuxième vérin de raccordement peut être déployé dans les deuxièmes trous de vérin ou sortir de ceux-ci ; et
une extrémité fixe du deuxième vérin de commande est fixée sur la plate-forme de levage et d'abaissement (4031) du mécanisme de levage et d'abaissement (403), et l'extrémité de sortie du deuxième vérin de commande est configurée pour entraîner le deuxième vérin de raccordement et les premiers éléments à rainure concave (4021) de façon à se déplacer.

5. Système de transfert rail-route de conteneurs selon la revendication 3, dans lequel le mécanisme de plateau (401) comprend :
des deuxièmes éléments à rainure concave (4013), dont le nombre est identique au nombre des deuxièmes glissières (4022) ;
une pluralité de deuxièmes plaques fixes reliées entre les deuxièmes éléments à rainure concave (4013) ;
une pluralité de butées de guidage disposées sur le dessus des deuxièmes éléments à rainure concave (4013) ;
une pluralité de roues de déplacement fixées sur le côté des deuxièmes éléments à rainure concave (4013) ;
un troisième composant d'entraînement (4011) ; et
un quatrième composant d'entraînement ;
et dans lequel, les deuxièmes éléments à rainure concave (4013) sont disposés sur les deuxièmes glissières (4022) et les recouvrent ;
le conteneur est positionné entre les butées de guidage une fois que le conteneur est placé sur les deuxièmes éléments à rainure concave (4013) ;
les roues de déplacement sont disposées de façon à rouler sur la plate-forme de levage et d'abaissement (4031) du mécanisme de levage et d'abaissement (403) ;
le troisième composant d'entraînement (4011) est configuré pour entraîner les deuxièmes éléments à rainure concave (4013) de façon à se déployer de la position initiale à la voie ferrée, ou se rétracter de la voie ferrée à la position initiale ; et
le quatrième composant d'entraînement est configuré pour entraîner les deuxièmes éléments à rainure concave (4013) de façon à se déployer d'une position initiale à la position de stationnement du camion porte-conteneurs, ou se rétracter de la position de stationnement du camion porte-conteneurs à la position initiale.

6. Système de transfert rail-route de conteneurs selon la revendication 5, dans lequel le troisième composant d'entraînement (4011) comprend un troisième vérin de commande et un troisième vérin de raccordement fixé à une extrémité de sortie du troisième vérin de commande ;
les deuxièmes éléments à rainure concave (4013) sont pourvus de troisièmes trous de vérin, et un corps de tige du troisième vérin de raccordement peut être déployé dans les troisièmes trous de vérin ou sortir de ceux-ci ;
une extrémité fixe du troisième vérin de commande est fixée à la plate-forme de levage et d'abaissement (4031) du mécanisme de levage et d'abaissement, et l'extrémité de sortie du troisième vérin de commande est configurée de façon à entraîner le troisième vérin de raccordement et les deuxièmes éléments à rainure concave (4013) de façon à se déplacer ;
le quatrième composant d'entraînement comprend un quatrième vérin de commande et un quatrième vérin de raccordement fixé à une extrémité de sortie du quatrième vérin de commande ;
les deuxièmes éléments à rainure concave (4013) sont pourvus de quatrièmes trous de vérin, et un corps de tige du quatrième vérin de raccordement peut être déployé dans les quatrièmes trous de vérin ou sortir de ceux-ci ; et
une extrémité fixe du quatrième vérin de commande est fixée sur la plate-forme de levage et d'abaissement (4031), et l'extrémité de sortie du quatrième vérin de commande est configurée pour entraîner le quatrième vérin de raccordement et les deuxièmes éléments à rainure concave (4013) de façon à se déplacer.

7. Système de transfert rail-route de conteneurs selon la revendication 3, dans lequel le dispositif de manipulation de conteneur (1) comprend :
une première poutre supérieure (103) ;
une deuxième poutre supérieure (104) ;
une troisième poutre supérieure (105) ;
une pluralité de colonnes télescopiques reliées sous la première poutre supérieure (103) et la deuxième poutre supérieure (104) ;
une entretoise fixée sous la troisième poutre supérieure (105) ; et
une poutre de support fixée entre les colonnes télescopiques sous la deuxième poutre supérieure (104) ;
et dans lequel, les colonnes télescopiques sous la première poutre supérieure (103) sont fixées sur la plate-forme de transport (3), et une distance entre les colonnes télescopiques est supérieure à une longueur du conteneur ;
les colonnes télescopiques sous la deuxième poutre supérieure (104) sont disposées sur le sol ; la deuxième poutre supérieure (104) est parallèle à la première poutre supérieure (103) ; et la position de stationnement du camion porte-conteneurs est située entre la première poutre supérieure (103) et la deuxième poutre supérieure (104) ;
la troisième poutre supérieure (105) est fixée entre la première poutre supérieure (103) et la deuxième poutre supérieure (104) ;
l'entretoise est configurée pour coopérer avec des pièces de coin aux quatre coins sur le dessus du conteneur pour verrouiller ou déverrouiller le conteneur ;
le troisième vérin de commande est disposé à l'intérieur des colonnes télescopiques, et le troisième vérin de commande est configuré pour entraîner les colonnes télescopiques de façon à se déployer ou se rétracter ; et
une partie d'extrémité des premiers éléments à rainure concave (4021) est pressée sur la poutre de support après que le mécanisme de pontage (402) ait été déployé.

8. Système de transfert rail-route de conteneurs selon la revendication 7, comprenant en outre une plate-forme mobile ; la plate-forme mobile comprend un premier rail en acier, un deuxième rail en acier et un véhicule mobile, et dans lequel, la plate-forme de transport (3) est fixée sur le véhicule mobile ;
le premier rail en acier et le deuxième rail en acier sont parallèles à la voie ferrée ;
le véhicule mobile est disposé de façon coulissante sur le premier rail en acier ;
le deuxième rail en acier est disposé sur le sol sous la deuxième poutre supérieure (104) ; et
un rouleau est disposé à la base des colonnes télescopiques sous la deuxième poutre supérieure (104), et le rouleau est disposé de façon à rouler sur le deuxième rail en acier.

9. Système de transfert rail-route de conteneurs selon la revendication 1, dans lequel le dispositif de prélèvement latéral bidirectionnel (4) comprend un mécanisme de pontage (402) et un mécanisme de plateau (401) ;
et dans lequel, le mécanisme de pontage (402) est configuré pour coulisser à une position correspondant à la voie ferrée, ou coulisser à une position correspondant à la position de stationnement du camion porte-conteneurs ; et le mécanisme de plateau (401) est configuré pour coulisser sur le mécanisme de pontage (402) à une position correspondant à la voie ferrée ou à une position correspondant à la position de stationnement du camion porte-conteneurs ;
le dispositif de levage (2) comprend :
des mécanismes de support en forme de porte disposés aux deux extrémités d'une plate-forme de transport (3) ; et
une pluralité de parties de verrou tournant de conteneur (204) disposées sous le dessus des mécanismes de pied de porte sur les deux côtés de ceux-ci ;
et dans lequel, les parties de verrou tournant de conteneur (204) sont configurées pour verrouiller un conteneur ; les mécanismes de support en forme de porte sont configurés pour entraîner le conteneur de façon à se soulever ou à descendre, de sorte que le conteneur est levé depuis le mécanisme de plateau (401) et placé sur le véhicule ferroviaire, ou le conteneur est levé depuis le véhicule ferroviaire et placé sur le mécanisme de plateau (401) ;
le dispositif de manipulation de conteneur (1) comprend :
une pluralité de poutres supérieures ;
une pluralité de colonnes télescopiques disposées sous les poutres supérieures ; et
une entretoise fixée sous l'une des poutres supérieures ;
et dans lequel, l'entretoise est configurée de façon à coopérer avec des pièces de coin aux quatre coins sur le dessus du conteneur pour verrouiller ou déverrouiller le conteneur ; les colonnes télescopiques sont configurées pour se déployer ou se rétracter pour entraîner le conteneur de façon à s'élever ou s'abaisser, de sorte que le conteneur est levé depuis le mécanisme de plateau (401) et placé sur le camion porte-conteneurs, ou le conteneur est levé depuis le camion porte-conteneurs et placé sur le mécanisme de plateau (401).
